# EUROPEAN PATENT SPECIFICATION

(11) **EP 3 373 376 B1**
(45) Date of publication and mention of the grant of the patent: **21.05.2025**
(21) Application number: 16883671.6
(22) Date of filing: 18.10.2016
(51) Int. Cl.: H01M 10/054, H01M 4/13, H01M 4/136, H01M 4/36, H01M 4/485, H01M 4/58, H01M 4/587, H01M 4/62

(54) **NONAQUEOUS SECONDARY BATTERY, AND POSITIVE ELECTRODE ACTIVE MATERIAL FOR NONAQUEOUS SECONDARY BATTERIES AND METHOD FOR PRODUCING SAME**
SEKUNDÄRBATTERIEN MIT WASSERFREIEM ELEKTROLYT, POSITIVELEKTRODENAKTIVMATERIAL FÜR SEKUNDÄRBATTERIEN MIT WASSERFREIEM ELEKTROLYT UND VERFAHREN ZUR HERSTELLUNG DAVON
BATTERIE SECONDAIRE NON AQUEUSE, MATÉRIAU ACTIF D'ÉLECTRODE POSITIVE POUR BATTERIES SECONDAIRES NON AQUEUSES ET PROCÉDÉ DE PRODUCTION ASSOCIÉ

(30) Priority: 06.01.2016 JP 2016001234
(43) Date of publication of application: 12.09.2018
(73) Proprietor: Murata Manufacturing Co., Ltd., Nagaokakyo-shi, Kyoto 617-8555 (JP)
(72) Inventor: SUGENO, Naoyuki, Koriyama-shi Fukushima 963-0531 (JP)
(74) Representative: Witte, Weller & Partner Patentanwälte mbB
(86) International application number: PCT/JP2016/080845
(87) International publication number: WO 2017/119171

(56) References cited:
- WO-A1-2014/184533
- WO-A1-2015/037489
- WO-A1-2015/163045
- WO-A1-2015/163045
- WO-A1-2015/163045
- JP-A- 2000 030 686
- JP-A- 2008 034 306
- JP-A- 2011 076 931
- JP-A- 2015 115 283
- JP-A- 2016 100 058
- JP-A- 2016 110 991
- JP-A- 2016 181 467
- US-A1- 2015 147 621
- PRABEER BARPANDA ET AL: "A 3.8-V earth-abundant sodium battery electrode", NATURE COMMUNICATIONS, vol. 5, 17 July 2014 (2014-07-17), XP055325779, DOI: 10.1038/ncomms5358

## Description

### TECHNICAL FIELD

The present disclosure relates to a nonaqueous secondary battery, and a positive electrode active material for a nonaqueous secondary battery, and a method for producing the material.

### BACKGROUND ART

The development of nonaqueous secondary batteries with a material containing sodium (Na) as an active material have been advanced. For example, WO2015/037489 A1 discloses a positive electrode active material for a sodium ion secondary battery, containing a sulfate represented by NaₘMₙ(SO₄)₃, where "M" represents a transition metal element. In this regard, the positive electrode active material is coated with a conductive material, and examples of the conductive material include graphite, soft carbon, hard carbon, carbon black, Ketjen black, acetylene black, graphite, activated carbon, carbon nanotubes, carbon fibers, and mesoporous carbon. Then, the positive electrode active material and the conductive material are subjected to grinding and mixing, thereby preparing an electrode. Alternatively, an electrode is prepared by immersing a powder of a positive electrode active material in a solution containing a conductive material or a precursor for the conductive material, and then subjecting the powder to a heat treatment to deposit the conductive material on the surface of the powder. Alternatively, an electrode is produced by flowing a powder of a positive electrode active material in a gas phase containing a conductive material or a precursor for the conductive material, and then subjecting the powder to a heat treatment, if necessary.

Japanese Patent Application Laid-Open No. 2015-115283 discloses a positive electrode including a substance capable of inserting and desorbing sodium ions, which contains sodium ions in the structure of the substance; a negative electrode including a substance capable of inserting and desorbing metallic sodium, a sodium-containing substance, or sodium ions; and a sodium secondary battery including an electrolyte that has sodium ion conductivity. In this regard, the substance capable of inserting and desorbing sodium ions includes NaₓFe₂(SO₄)₃ (0 < x ≤ 2). Furthermore, according to this Japanese Patent Application Laid-Open Publication, the positive electrode is composed of a material obtained by ball milling of grinding and mixing NaₓFe₂(SO₄)₃ and carbon particles (specifically, acetylene black or Ketjen black).Another example for a sodium ion battery is disclosed in WO2015/163045. Especially, a positive electrode material is disclosed which contains carbonaceous electrode active material composite particles that comprise: positive electrode active material particles and a carbonaceous coating covering the surface of the positive electrode active material particles. Said particles contain a sodium sulfate salt compound that is represented by NaₓM_{y}(SO₄)_{y} (where M represents one or more elements selected from the group consisting of Sc, Ti , V, Cr, Mn, Fe, Co, Ni, Cu, Zn, Y, Zr, Nb, Mo, Tc, Ru, Rh, Pd, and Ag, and 1.6 ≤ x ≤ 2.4, 1.6 ≤ y ≤ 2.4, and 2.4 ≤ z ≤3.6) having an M₂O₁₀ dimer crystal structure in which a dimer is formed by edge-sharing between two MO6 in a structure.

### PRIOR ART DOCUMENTS

### PATENT DOCUMENTS

Patent Document 1: WO2015/037489A1
Patent Document 2: Japanese Patent Application Laid-open No. 2015-115283
Patent Document 3: WO2015/163045

### SUMMARY OF THE INVENTION

### Problem to be solved by the invention

However, the technique disclosed in the foregoing international publication or Japanese Patent Application Laid-Open Publication has problems such as interference with smooth insertion of sodium ions into a positive electrode active material and smooth desorption of sodium ions from the positive electrode active material by a conductive material composed of graphite or the like, or carbon particles, and problems such as collapse of the crystal structure of a positive electrode active material due to desorption of sodium ions from a positive electrode active material. As a result, it is difficult to obtain a nonaqueous secondary battery which has excellent long-term reliability.

Accordingly, an object of the present disclosure is to provide a nonaqueous secondary battery which has excellent long-term reliability, a positive electrode active material suitable for use in such a nonaqueous secondary battery, and a manufacturing method therefor.

### Means for solving the problem

A nonaqueous secondary battery according to the present disclosure for achieving the object mentioned above is provided.

A method for producing a positive electrode active material for a nonaqueous secondary battery according to the present disclosure may be provided. The method includes Na_{X}Fe_{Y}(SO₄)_{Z} (within the ranges of 0 < X ≤ 3, 1 ≤ Y ≤ 3, and 2 ≤ Z ≤ 4), where the positive electrode active material with a surface coated with a hydrogen group-containing carbonaceous layer is obtained by coating the surface of the positive electrode active material with a carbon-based material, and then firing the carbon-based material at 400°C or lower in an inert gas atmosphere.

### Advantageous effect of the invention

The nonaqueous secondary battery according to the present disclosure, the positive electrode active material for a nonaqueous secondary battery according to the present disclosure, and a positive electrode active material obtained by the method for producing a positive electrode active material for a nonaqueous secondary battery according to the present disclosure have surfaces coated with a hydrogen group-containing carbonaceous layer, thus making it possible to impart conductivity to the positive electrode active material, and moreover develop a smooth reaction, since the insertion of sodium ions into the positive electrode active material and the desorption of sodium ions from the positive electrode active material are unlikely to be inhibited by the carbonaceous layer. In particular, because of the hydrogen group-containing carbonaceous layers formed, distortion between crystal layers of the positive electrode active material is dispersed in desorption of sodium ions from the positive electrode active material, thereby making it possible to suppress the collapse of the crystal structure in a reliable manner. In addition, stabilization of the crystal can be achieved even in the case of charge/discharge with a large current, thereby achieving excellent long-term reliability. On the other hand, when the surface is coated with a carbonaceous layer containing no hydrogen group, the arrangement between crystal layers of the positive electrode active material is fixed by such a carbonaceous layer, and the desorption of sodium ions makes the crystal layers of the positive electrode active material unstable, thereby making the crystal more likely to collapse. It is to be noted that the effects described in this specification are merely considered by way of example, and not to be considered limited, and there may be additional effects.

### BRIEF EXPLANATION OF DRAWINGS

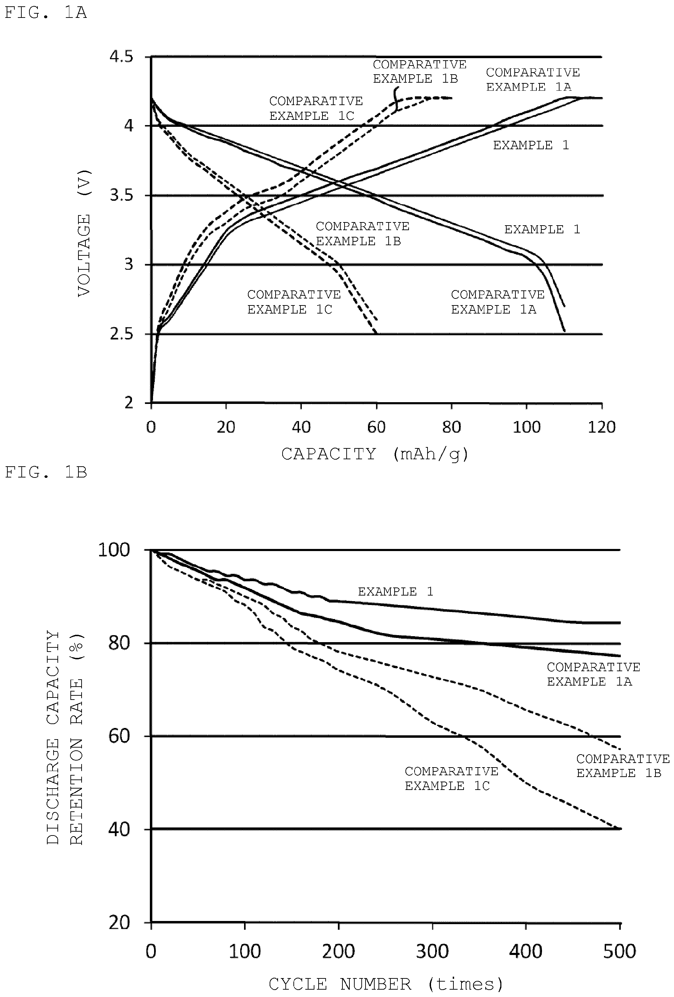

FIG. 1A shows initial charge/discharge curves (the horizontal axis indicates a capacity (unit: milliampere·hour/gram), whereas the horizontal axis indicates a voltage (unit: volt)) for nonaqueous secondary batteries according to Example 1, Comparative Example 1A, Comparative Example 1B, and Comparative Example 1C, and FIG. 1B a graph showing the result of examining the relationship between the number of charge/discharge cycles and the discharge capacity retention rate (%) for the nonaqueous secondary batteries according to Example 1, Comparative Example 1A, Comparative Example 1B, and Comparative Example 1C.

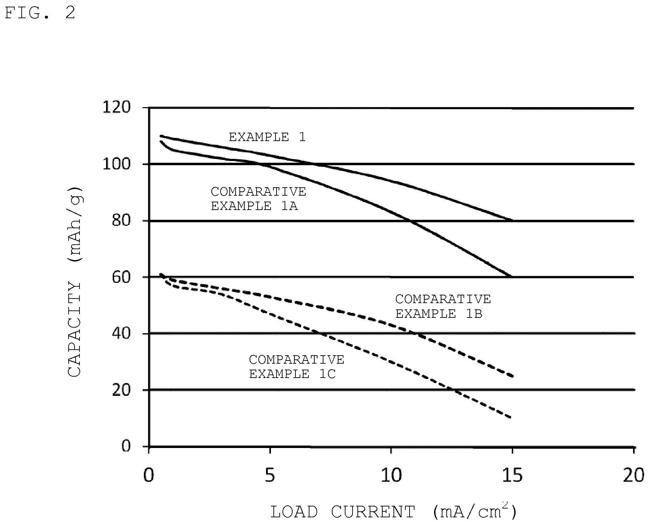

FIG. 2 is a graph showing the result of examining the relationship between the load current (unit: milliampere/cm²) and the capacity (unit: milliampere·hour/gram) for the nonaqueous secondary batteries according to Example 1, Comparative Example 1A, Comparative Example 1B, and Comparative Example 1C.

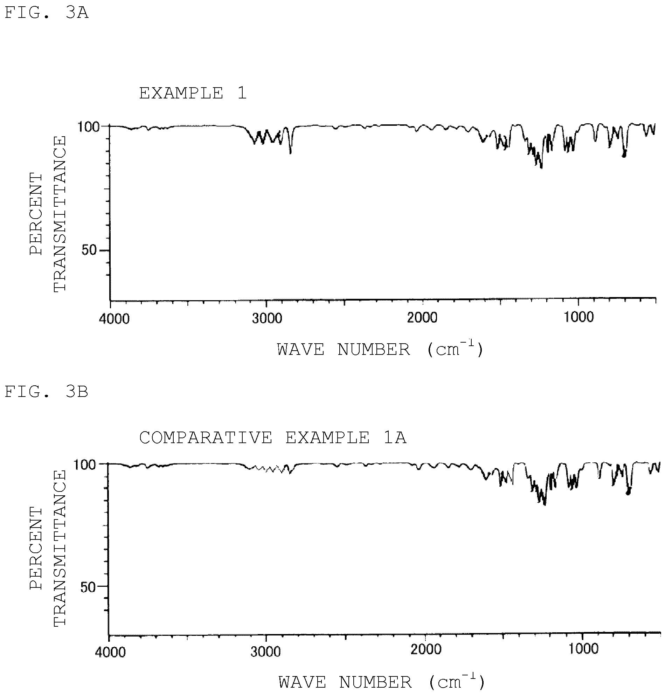

FIGS. 3A and 3B are respectively graphs showing the results of checking whether a carbonaceous layer contains a hydrogen group or not in positive electrode active materials constituting the nonaqueous secondary batteries according to Example 1 and Comparative Example 1A, in accordance with reflective infrared spectroscopy.

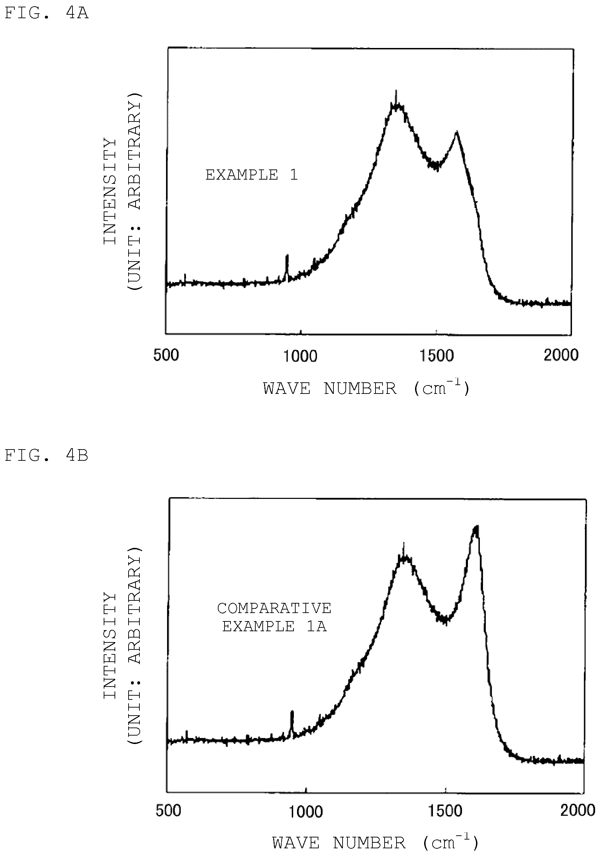

FIGS. 4A and 4B are respectively graphs showing Raman spectroscopic spectra for the positive electrode active materials constituting the nonaqueous secondary batteries according to Example 1 and Comparative Example 1A.

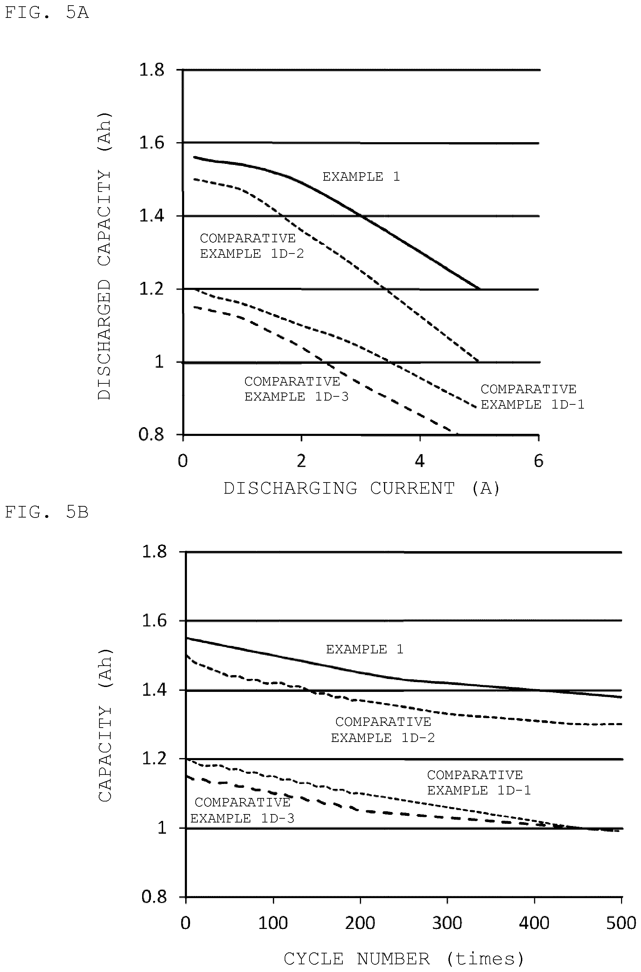

FIG. 5A is a graph showing the result of examining the relationship between discharging current (unit: ampere) and discharged capacity (unit: ampere·hour) for nonaqueous secondary batteries according to Example 1, Comparative Example 1D-1, Comparative Example 1D-2 and Comparative Example 1D-3, and FIG. 5B is a graph showing the result of examining the relationship between the number of charge/discharge cycles and the capacity (unit: ampere·hour) for the nonaqueous secondary batteries according to Example 1, Comparative Example 1D-1, Comparative Example 1D-2 and Comparative Example 1D-3.

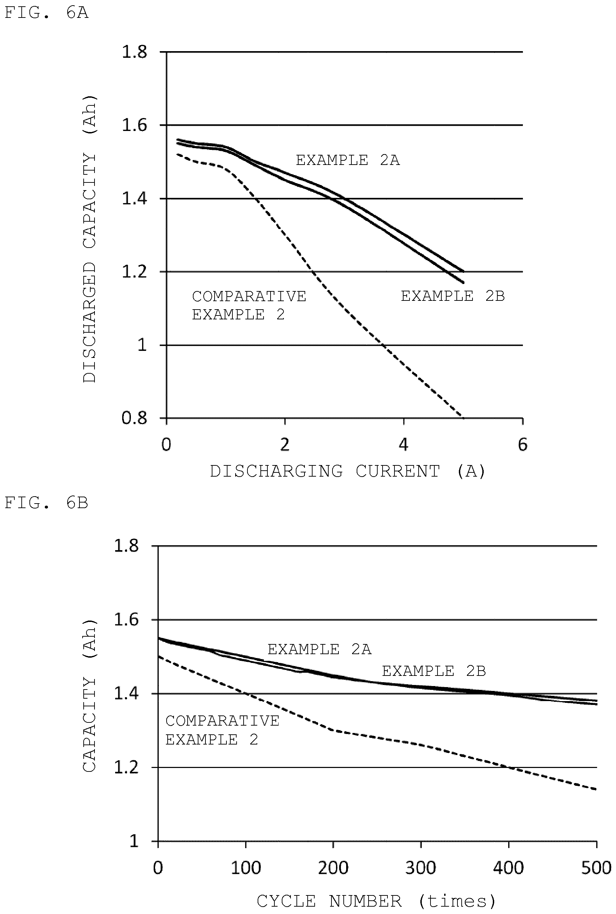

FIG. 6A is a graph showing the result of examining the relationship between discharging current (unit: ampere) and discharged capacity (unit: ampere·hour) for nonaqueous secondary batteries according to Example 2A, Example 2B, and Comparative Example 2, and FIG. 6B is a graph showing the result of examining the relationship between the number of charge/discharge cycles and the capacity (unit: ampere·hour) for the nonaqueous secondary batteries according to Example 2A, Example 2B, and Comparative Example 2.

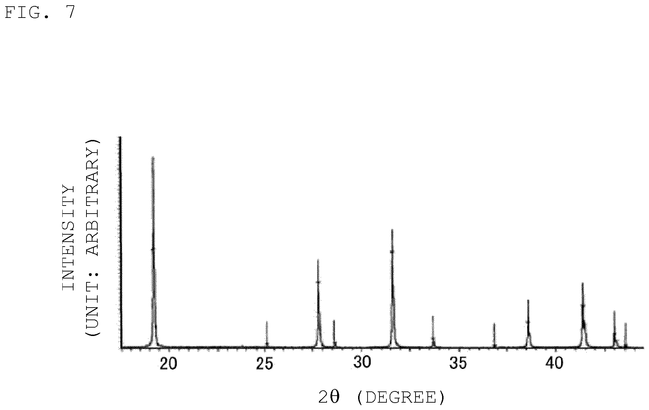

FIG. 7 is a chart showing X-ray diffraction data on a negative electrode active material (Na_{1.6}Li_{1.6}K_{0.8}Ti₅O₁₂) obtained in Example 3.

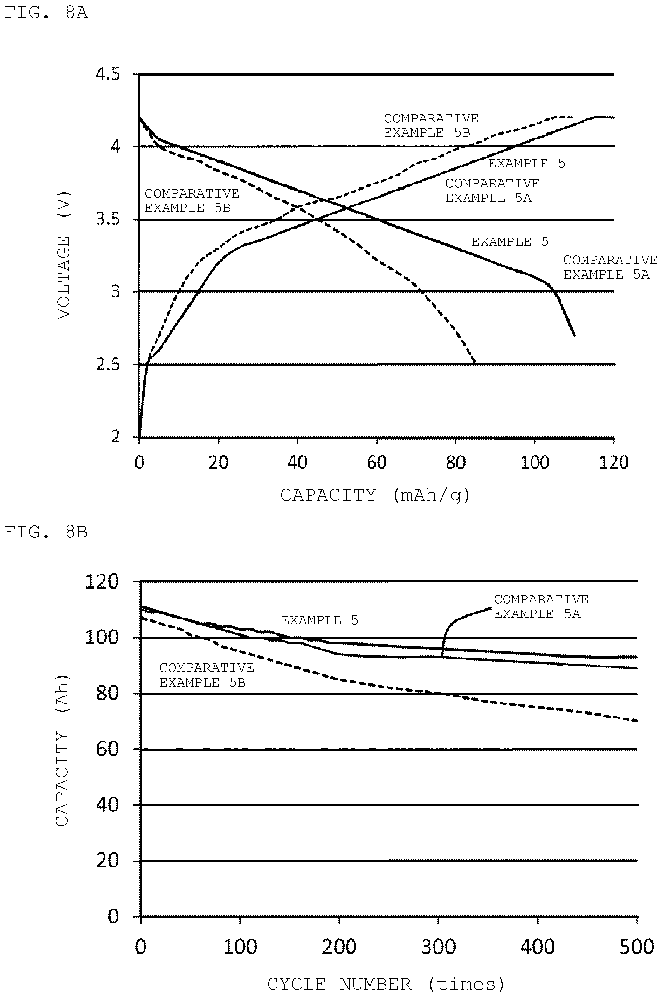

FIG. 8A shows initial charge/discharge curves (the horizontal axis indicates a capacity (unit: milliampere·hour/gram), whereas the horizontal axis indicates a voltage (unit: volt)) for nonaqueous secondary batteries according to Example 5, Comparative Example 5A, and Comparative Example 5B, and FIG. 8B is a graph showing the result of examining the relationship between the number of charge/discharge cycles and the capacity (unit: milliampere·hour/gram) for the nonaqueous secondary batteries according to Example 5, Comparative Example 5A, and Comparative Example 5B.

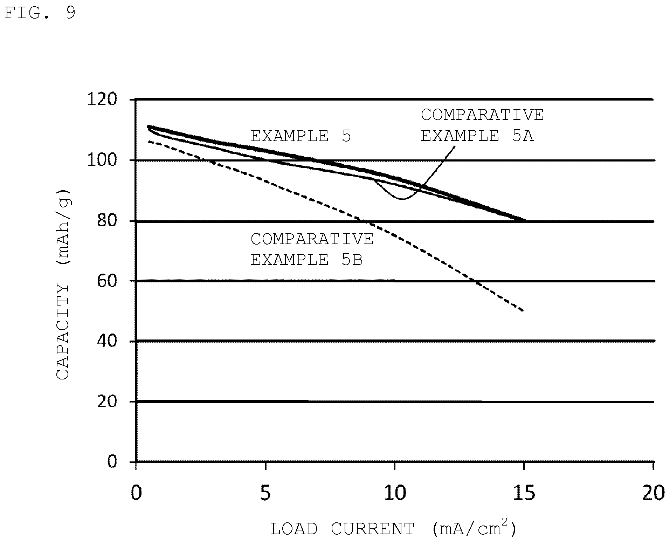

FIG. 9 is a graph showing the result of examining the relationship between the load current (unit: milliampere/cm²) and the capacity (unit: milliampere·hour/gram) for the nonaqueous secondary batteries according to Example 5, Comparative Example 5A, and Comparative Example 5B.

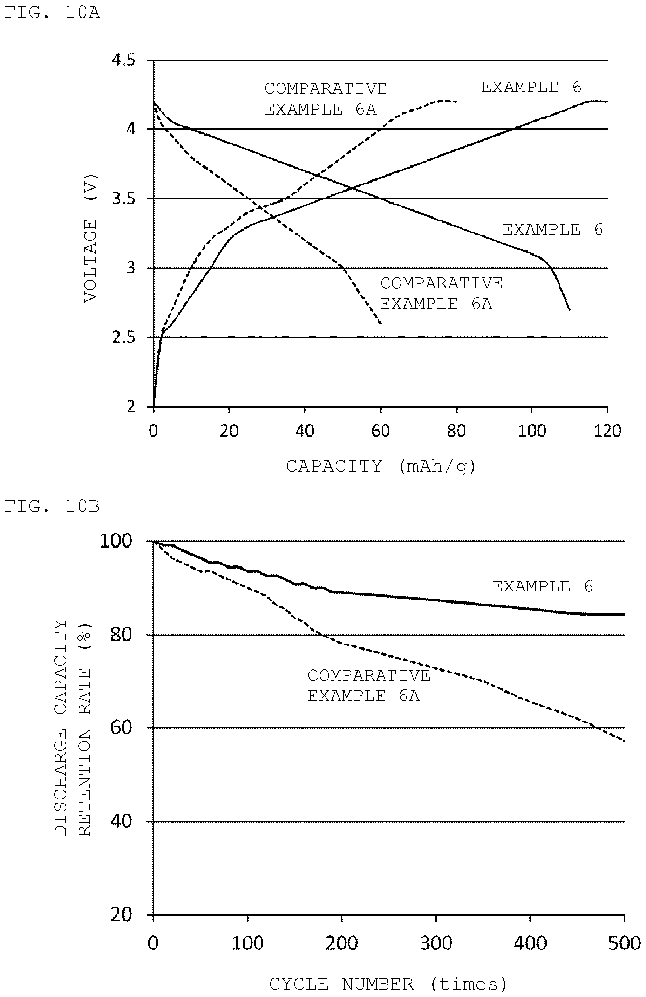

FIG. 10A shows initial charge/discharge curves (the horizontal axis indicates a capacity (unit: milliampere·hour/gram), whereas the horizontal axis indicates a voltage (unit: volt)) for nonaqueous secondary batteries according to Example 6 and Comparative Example 6A, and FIG. 10B a graph showing the result of examining the relationship between the number of charge/discharge cycles and the discharge capacity retention rate (%) for the nonaqueous secondary batteries according to Example 6 and Comparative Example 6A.

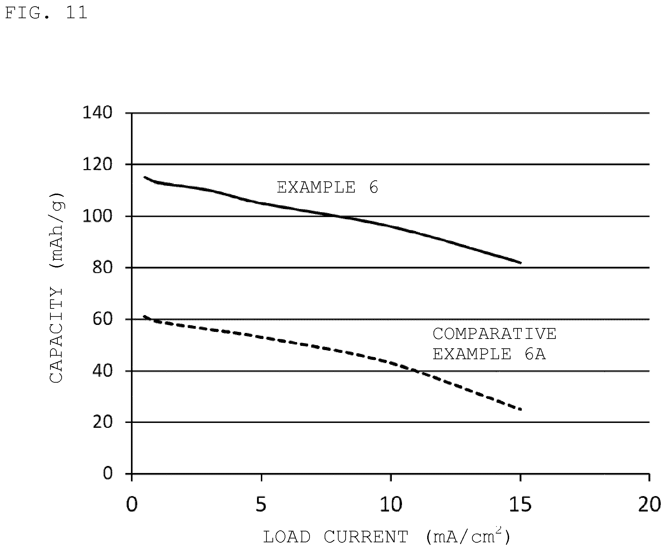

FIG. 11 is a graph showing the result of examining the relationship between the load current (unit: milliampere/cm²) and the capacity (unit: milliampere·hour/gram) for the nonaqueous secondary batteries according to Example 6 and Comparative Example 6A.

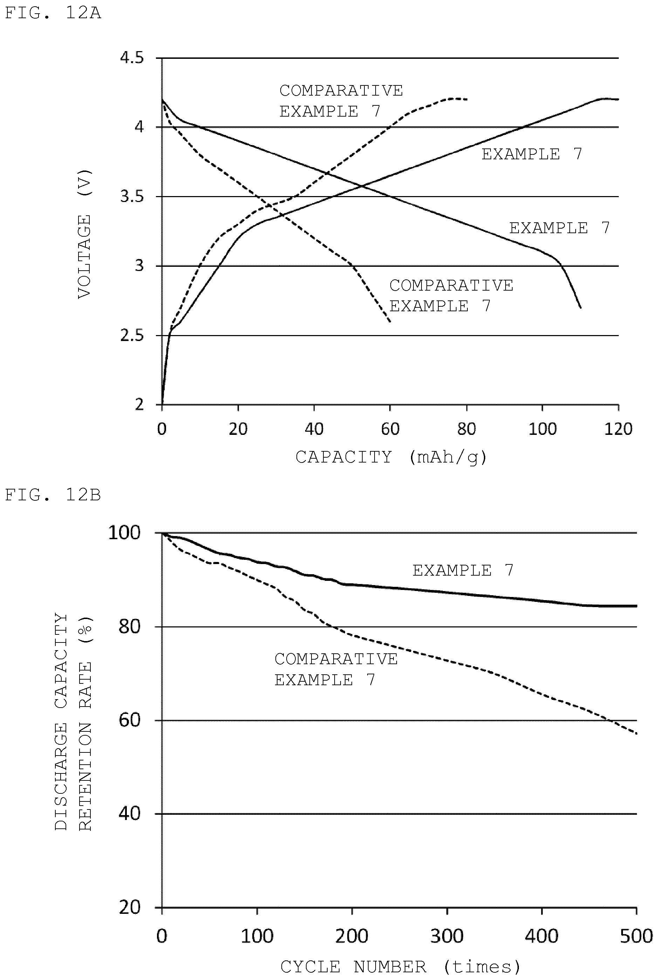

FIG. 12A shows initial charge/discharge curves (the horizontal axis indicates a capacity (unit: milliampere·hour/gram), whereas the horizontal axis indicates a voltage (unit: volt)) for nonaqueous secondary batteries according to Example 7 and Comparative Example 7, and FIG. 12B a graph showing the result of examining the relationship between the number of charge/discharge cycles and the discharge capacity retention rate (%) for the nonaqueous secondary batteries according to Example 7 and Comparative Example 7.

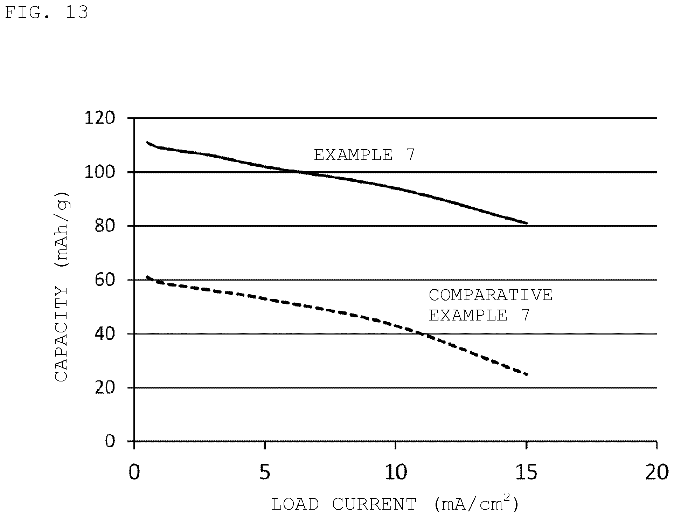

FIG. 13 is a graph showing the result of examining the relationship between the load current (unit: milliampere/cm²) and the capacity (unit: milliampere·hour/gram) for the nonaqueous secondary batteries according to Example 7 and Comparative Example 7.

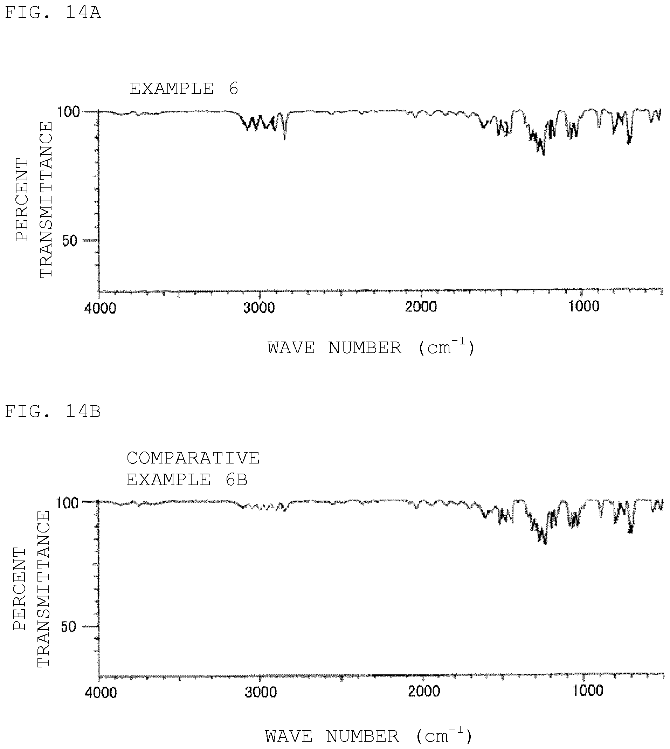

FIG. 14A is a graph showing the results of checking whether a carbonaceous layer contains a hydrogen group or not in a positive electrode active material constituting the nonaqueous secondary battery according to Example 6, in accordance with reflective infrared spectroscopy, and FIG. 14B is a graph showing the results of checking whether a carbonaceous layer contains a hydrogen group or not in a positive electrode active material constituting the nonaqueous secondary battery according to Comparative Example 6B, in accordance with reflective infrared spectroscopy.

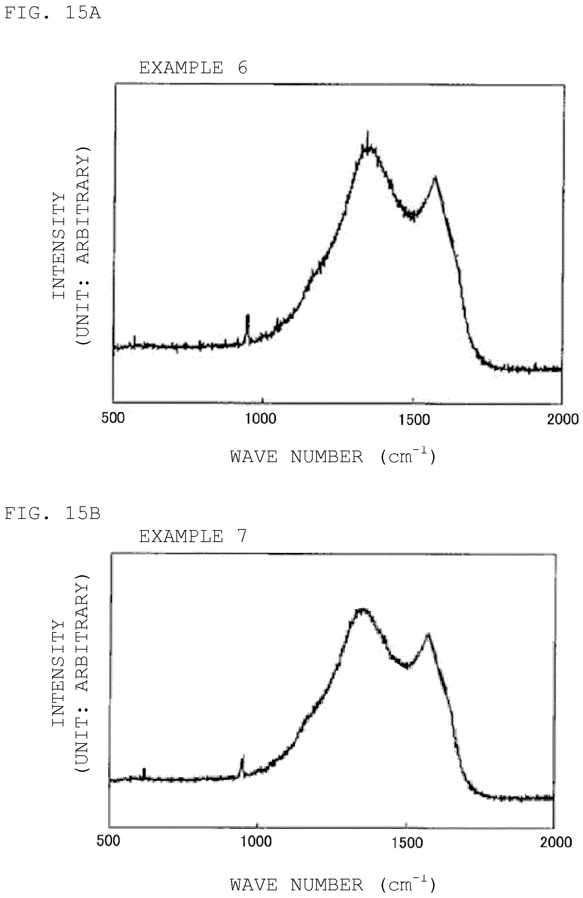

FIG. 15A is a graph showing a Raman spectroscopic spectrum for the positive electrode active material constituting the nonaqueous secondary battery according to Example 6, and FIG. 15B is a graph showing a Raman spectroscopic spectrum for the positive electrode active material constituting the nonaqueous secondary battery according to Example 7.

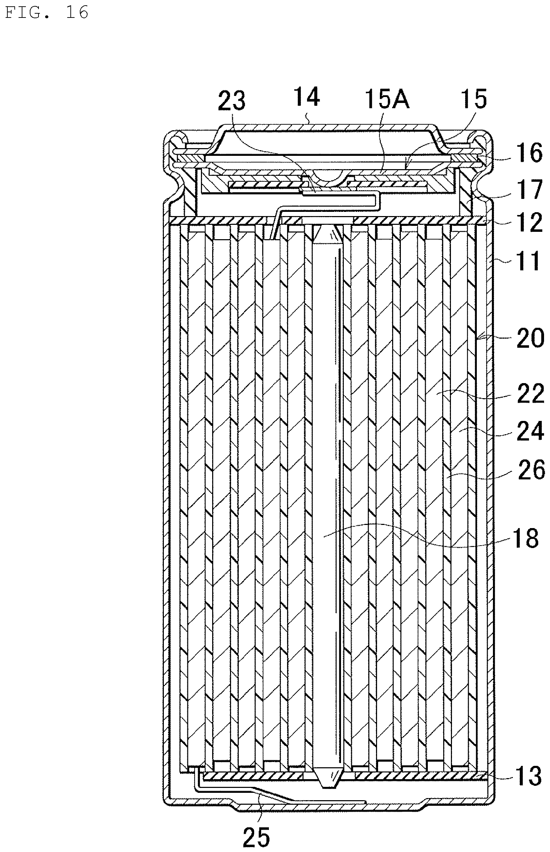

FIG. 16 is a schematic cross-sectional view of a cylindrical nonaqueous secondary battery (sodium ion secondary battery) according to Example 1.

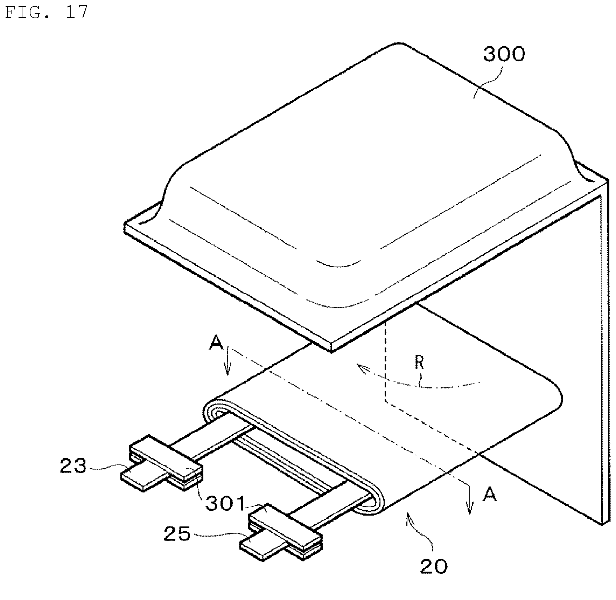

FIG. 17 is a schematic exploded perspective view of a rectangular nonaqueous secondary battery (sodium ion secondary battery) of laminate film type according to Example 8.

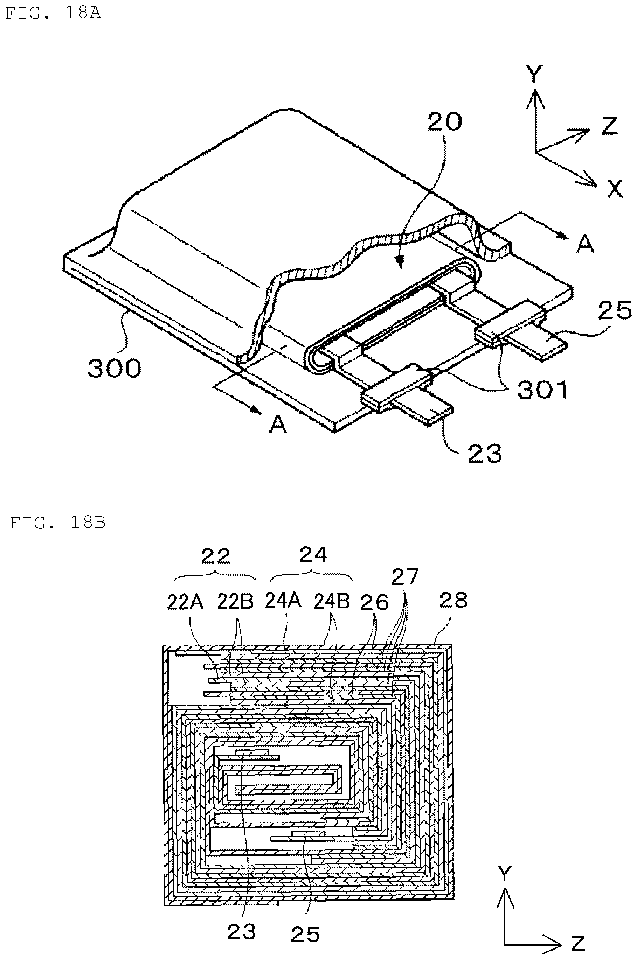

FIG. 18A is a schematic exploded perspective view of the nonaqueous secondary battery (sodium ion secondary battery) of laminate film type according to Example 8 in a different condition from that shown in FIG. 17, and FIG. 18B is a schematic cross-sectional view of an electrode stacked body in the nonaqueous secondary battery (sodium ion secondary battery) of laminate film type according to Example 8, taken along the arrows A-A in FIGS. 17 and 18A.

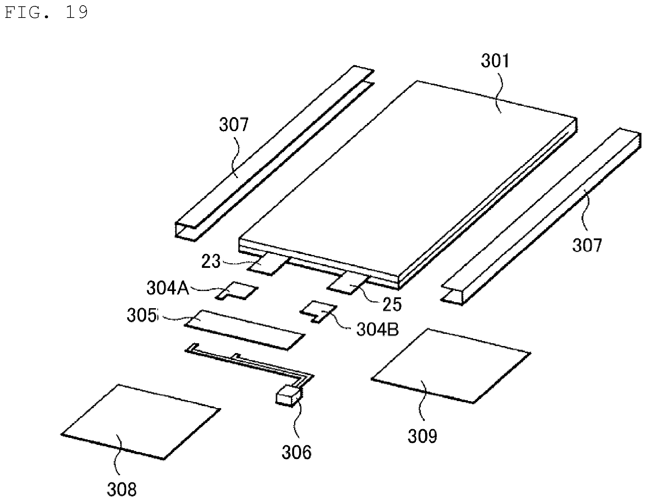

FIG. 19 is a schematic exploded perspective view of an application example (battery pack: unit cell) of the nonaqueous secondary battery (sodium ion secondary battery) according to the present disclosure in Example 8.

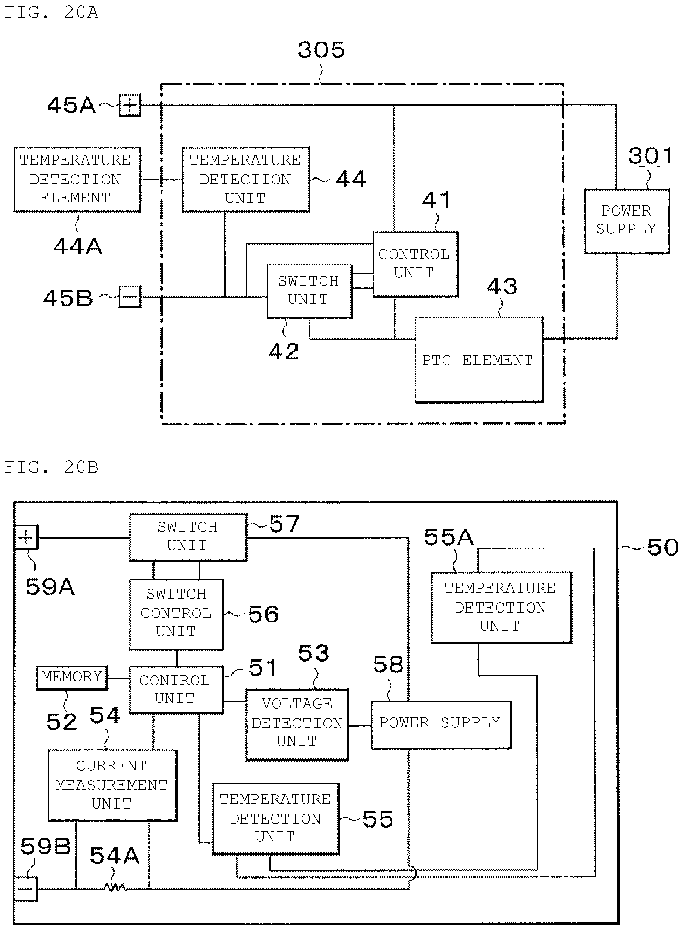

FIGS. 20A and 20B are block diagrams illustrating the configurations of application examples (battery packs: unit cells) of the (sodium ion secondary battery) according to the present disclosure in Example 1 to Example 8.

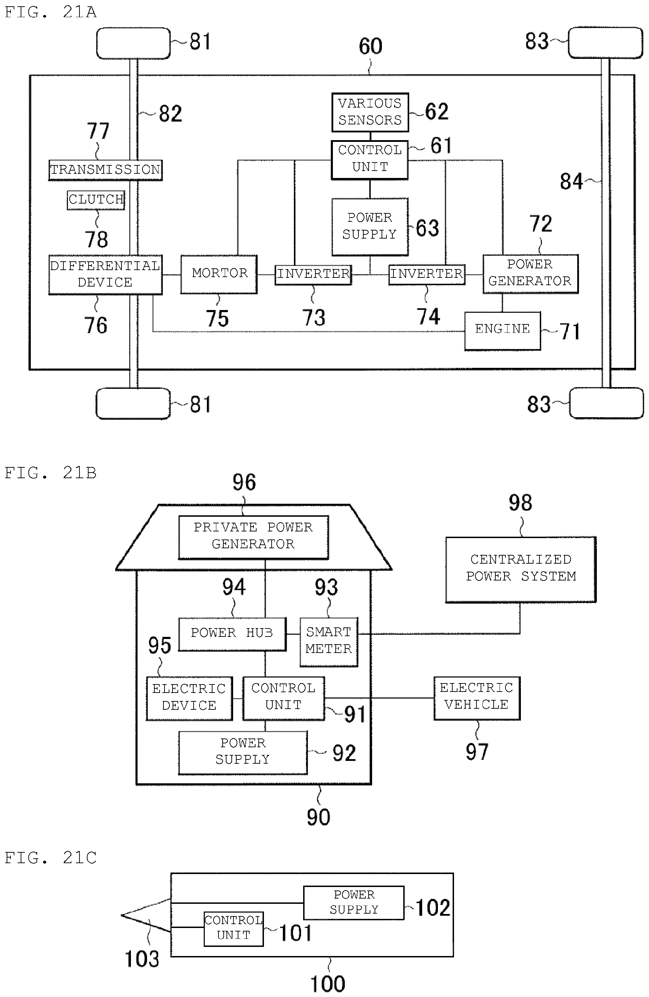

FIGS. 21A, 21B, and 21C are respectively a block diagram illustrating the configuration of an application example (electric vehicle) of the nonaqueous secondary battery (sodium ion secondary battery) according to the present disclosure in Example 1 to Example 8, a block diagram illustrating the configuration of an application example (power storage system) of the nonaqueous secondary battery (sodium ion secondary battery) according to the present disclosure in Example 1 to Example 8, and a block diagram illustrating the configuration of an application example (power tool) of the nonaqueous secondary battery (sodium ion secondary battery) according to the present disclosure in Example 1 to Example 8.

### MODE FOR CARRYING OUT THE INVENTION

Hereinafter, the present disclosure will be described based on examples with reference to the drawings, but the present disclosure is not to be considered limited to the examples, and various numerical values and materials in the examples are considered by way of example. It is to be noted that the description will be provided in the following order.
1. General Description of Nonaqueous Secondary Battery, and Positive Electrode Active Material for Nonaqueous Secondary Battery and Manufacturing Method therefor according to Present Disclosure
2. Example 1 (Nonaqueous Secondary Battery, and Positive Electrode Active Material for Nonaqueous Secondary Battery and Manufacturing Method therefor according to Present Disclosure)
3. Example 2 (Modification of Example 1)
4. Example 3 (Another Modification of Example 1)
5. Example 4 (Modification of Example 3)
6. Example 5 (Modification of Example 1 and Example 4)
7. Example 6 (Modification of Example 1 to Example 5)
8. Example 7 (Another Modification of Example 1 to Example 5)
9. Example 8 (Modification of Example 1 to Example 7)
10. Example 9 (Application Example of Secondary Battery according to Example 1 to Example 8)
11. Others

### <General Description of Nonaqueous Secondary Battery, and Positive Electrode Active Material for Nonaqueous Secondary Battery and Manufacturing Method therefor according to Present Disclosure>

In a method for producing a positive electrode active material for a nonaqueous secondary battery according to the present disclosure, a carbonaceous material is preferably subjected to firing in an inert gas atmosphere at 300°C to 400°C for 12 hours to 24 hours.

In the nonaqueous secondary battery according to the present disclosure, the positive electrode active material for a nonaqueous secondary battery according to the present disclosure, and the positive electrode obtained by the method for producing a positive electrode active material for a nonaqueous secondary battery according to the present disclosure, including the preferred embodiment described above (hereinafter collectively referred to as "a positive electrode active material and the like according to the present disclosure", the full width at half maximum for a peak in the vicinity of 2θ = 14 degrees in X-ray diffraction of the positive electrode active material with the use of the Cu-Kα ray (wavelength: 1.54184 angstroms) is preferably 0.4 degrees or more. Then, this makes it possible to relieve the expansion and shrinkage between crystal layers of the positive electrode active material in insertion and desorption of sodium ions which are large in ionic radius, and thus prevent collapse of the positive electrode active material, and as a result, a nonaqueous secondary battery can be provided which includes a positive electrode active material with excellent long-term cycle characteristics.

In a nonaqueous secondary battery according to the present disclosure, including the preferred embodiment mentioned above, a negative electrode active material can be adapted to include Na_{P}M_{Q}TiO_{R} (where 0 < P < 0.5, 0 < Q < 0.5, 1 ≤ R ≤ 2, M is an alkali metal element other than Na). Specific examples of "M" in Na_{P}M_{Q}TiO_{R} can include lithium (Li), potassium (K), or a combination of lithium (Li) and potassium (K), more specifically, for example, Na_{P}Li_{0.5-Q}M'_{Q}TiO_{R}, Na_{P}K_{0.5-Q}M'_{Q}TiO_{R}, Na_{P}(K + Li)_{0.5-Q}M'_{Q}TiO_{R} (where M' is a rare earth element). Alternatively, in the nonaqueous secondary battery according to the present disclosure, including the preferred embodiment mentioned above, the negative electrode active material can be adapted to include hard carbon, a NaTiO₂ based material, or a NaFePO₄ based material. Specific examples of the NaTiO₂-based material can include NaTiO₂ and Na₄Ti₅O₁₂. Specific examples of the NaₓFe_{y}PO_{z}-based material can include Na₂Fe₂(PO₄)₃, NaFe₂(PO₄)₃, Na₂Fe(PO₄)₃, and NaFe(PO₄)₃. In addition, a so-called rocking-chair type nonaqueous secondary battery can also be obtained with the use of the same active material as the positive electrode active material for a negative electrode member.

In the nonaqueous secondary battery according to the present disclosure, including the various preferred embodiments described above, a binder constituting the negative electrode member can be adapted to include at least sodium polyacrylate (PAcNa), or alternatively, the binder constituting the negative electrode member can be adapted to include sodium polyacrylate (PAcNa) and carboxymethyl cellulose (CMC). These binders are excellent in affinity with the negative electrode active material and in dispersion in the negative electrode active material, without inhibiting the charge/discharge reaction, or without interfering with smooth insertion of sodium ions into the negative electrode active material, or smooth desorption of sodium ions from the negative electrode active material.

Furthermore, in the nonaqueous secondary battery according to the present disclosure,
the separator includes a polyolefin-based material with pores, and
an inorganic compound powder layer including an insulating material with sodium ion conductivity is adapted to be formed on both sides of the separator, and in this case, the inorganic compound powder layer can be adapted to include β-alumina. Such a configuration of the separator can make an improvement in sodium ion conductivity, and make a further increase in electrode thickness. More specifically, an increase can be made in the charge/discharge capacity of the nonaqueous secondary battery. However, the material constituting the inorganic compound powder layer is not limited to β alumina, but examples of the material can also include boehmite, K₂O-containing alumina, zirconium oxide, NaZrOₓ, NaSiOₓ, and NaPOₓ. Then with the use of the material along with, for example, an appropriate binder, an inorganic compound powder layer can be formed on the separator. Examples of the polyolefin-based material constituting the separator can include polyolefin resins such as polyethylene (PE) and polypropylene (PP), polyvinylidene fluoride (PVDF) resins, polytetrafluoroethylene resins, and polyphenylene sulfide resins. The thickness of the inorganic compound powder layer may be determined in consideration of the heat resistance required for the separator, the battery capacity, and the like, and can be, for example, 2 µm to 10 µm, or preferably 3 µm to 7 µm as an example. In some cases, an inorganic compound powder layer including an insulating material with sodium ion conductivity can be adapted to be formed on one side of the separator. The inorganic compound powder layer preferably includes a heat-resistant resin. Specific examples of the heat-resistant resin can include a polymer with a main chain containing a nitrogen atom and an aromatic ring, more specifically, for example, aromatic polyamide, aromatic polyimide, and aromatic polyamide imide. The thickness of the separator is preferably 5 µm or more and 50 µm or less, more preferably 7 µm or more and 30 µm or less. When the separator is excessively thick, the filling amounts of the active materials will be decreased, thereby decreasing the battery capacity, and the ionic conductivity will be decreased, thereby degrading the current characteristics. Conversely, when the separator is excessively thin, the mechanical strength of the separator will be decreased.

Furthermore, in the nonaqueous secondary battery according to the present disclosure, including the various preferred embodiments described above, the value of the electric capacity of the negative electrode member is preferably adapted to be larger than the value of the electric capacity of the positive electrode member, and when a locking-chair type nonaqueous secondary battery is configured to include a positive electrode member and a negative electrode member composed of the same active material, sodium is made less likely to be deposited in the negative electrode member.

In addition, in the positive electrode active material and the like according to the present disclosure, including the various preferred embodiments described above, the Na_{X}Fe_{Y}(SO₄)_{Z} can be configured to be composed of, specifically, Na₂Fe₂(SO₄)₃, Na₂Fe(SO₄)₃, Na₂Fe(SO₄)₄, NaFe(SO₄)₂, or Na₂Fe(SO₄)₂. In this regard, Na₂Fe₂(SO₄)₃, Na₂Fe(SO₄)₃, Na₂Fe(SO₄)₄, NaFe(SO₄)₂, or Na₂Fe(SO₄)₂ encompass states of nonstoichiometry.

Furthermore, in the nonaqueous secondary battery according to the present disclosure, including the various preferred forms and configurations described above,
it is preferable to satisfy:
positive electrode combination thickness > negative electrode combination thickness > (thickness of separator) × 6; and
area of separator > area of negative electrode member > area of positive electrode member, or width of separator > width of negative electrode member > width of positive electrode member. The specifications of the positive electrode combination, the negative electrode combination, and the separator are specified as described above, thereby making it possible to constitute electrodes with combination layers thicker than those of a conventional nonaqueous secondary battery. Now, while charge/discharge characteristics with a large current can be improved by reducing the electrode thicknesses, the NASICON-type active material for use in the present disclosure is high in ionic conductivity of sodium ion, and also improved in electron conductivity, and it is thus possible to use combinations which are thicker than in the case of lithium ion. However, when the thickness is more than six times as large as the thickness (for example, 20 µm to 50 µm) of the separator, there is a possibility that in the preparation of a wound electrode stacked body, the electrodes (combinations) may be cracked, thereby causing the active materials to fall off, and defects such as internal short circuits may be cause due to dropouts, thereby resulting in a shortened cycle life. Thus, it is desirable to fabricate an actual nonaqueous secondary battery such that the thickness of the combination is 6 times as large as the separator thickness as a guide.

Furthermore, in the nonaqueous secondary battery according to the present disclosure, including the various preferred embodiments described above, the negative electrode member can be configured to include a conductive material.

For the positive electrode active material and the like according to the present disclosure, examples of a raw material for obtaining a hydrogen group-containing carbonaceous layer can include sucrose, fructose derived from plants, polyvinyl alcohol (PVA) and compounds thereof, water-soluble cellulose derivatives such as carboxymethyl cellulose (CMC), polyethylene oxide compounds, and polyacrylic acid compounds, and such materials are preferred materials, since the materials are dissolved well in water, thereby making it possible to provide aqueous solutions easily, and coat the surface of the positive electrode active material easily and reliably. Whether a hydrogen group-containing carbonaceous layer is formed or not can be examined in accordance with infrared spectroscopy. Specifically, the presence of "C-H" bonds may be evaluated on the basis of reflective infrared spectroscopic measurement. More specifically, in the case of the evaluation on the basis of the reflective infrared spectroscopic measurement, when the absorption derived from "C-H" vibration is observed around 2800 cm⁻¹, it can be determined that the carbonaceous layer contains a hydrogen group. It is to be noted that the absorption derived from "C=C" vibration is observed at 1000 cm⁻¹ to 800 cm⁻¹.

Examples of the conductive material constituting the positive electrode member can include, for example, Ketjen black (KB), vapor grown carbon fiber, acetylene black (AB), and graphite. In addition, examples of a binder constituting the positive electrode member can include, for example, fluorine-based resins such as polyvinylidene fluoride (PVDF), polytetrafluoroethylene (PTFE), and ethylene tetrafluoroethylene (ETFE), and copolymers and modified products of the foregoing fluorine-based resins; polyolefin-based resins such as polyethylene and polypropylene; and acrylic resins such as polyacrylonitrile and polyacrylic acid ester. More specifically, the copolymers of vinylidene fluoride can include, for example, a vinylidene fluoride-hexafluoropropylene copolymer, a vinylidene fluoride-tetrafluoroethylene copolymer, a vinylidene fluoride-chlorotrifluoroethylene copolymer, a vinylidene fluoride-hexafluoropropylene-tetrafluoroethylene copolymer. In addition, the examples can also include products obtained by the copolymerization of the above-exemplified copolymers with yet another ethylenically unsaturated monomer. The positive electrode member may further include a positive electrode current collector. A layer including a positive electrode active material (positive electrode active material layer, positive electrode combination layer) is formed on one or both sides of the positive electrode current collector. The material constituting the positive electrode current collector can be composed of, for example, aluminum (Al) and an alloy thereof, nickel (Ni) and an alloy thereof, copper (Cu) and an alloy thereof, and stainless steel. A positive electrode lead part is attached to the positive electrode current collector. Examples of the form of the positive electrode current collector or a negative electrode current collector to be described next include a foil-like material, a nonwoven fabric material, a mesh-like material, a porous sheet-like material, a rod-like material, and a plate-like material. The positive electrode active material layer and the negative electrode active material layer to be described next can be formed in accordance with, for example, an application method. More specifically, the layers can be formed in accordance with a method of mixing a positive electrode active material or a negative electrode active material in the form of a particle (powder) with a positive electrode binder, a negative electrode binder or the like, then dispersing the mixture in a solvent such as an organic solvent, and applying the dispersion to a positive electrode current collector or negative electrode current collector.

For example, when a NaTiO₂-based material or a NaFeSO₄-based material is used as the negative electrode active material, the same conductive material as the conductive material constituting the positive electrode member can be used as the conductive material constituting the negative electrode member. In addition, besides, a powder of nickel (Ni) or copper (Cu) can be used in addition to the foregoing materials when a carbon material or a metal compound is used as the negative electrode active material. The negative electrode member may further include a negative electrode current collector. A layer including a negative electrode active material (negative electrode active material layer, negative electrode combination layer) is formed on one or both sides of the negative electrode current collector. Examples of the material constituting the negative electrode current collector can include, for example, copper (Cu) and an alloy thereof, nickel (Ni) and an alloy thereof, aluminum (Al) and an alloy thereof, and stainless steel. From the viewpoint of improving the adhesion of the negative electrode active material layer to the negative electrode current collector based on a so-called anchor effect, the surface of the negative electrode current collector is preferably roughened. In this case, at least the surface of a region of the negative electrode current collector where the negative electrode active material layer is to be formed has only to be roughened. Methods for the roughening can include, for example, a method of forming fine particles through the use of electrolytic treatment. The electrolytic treatment refers to a method of providing the surface of the negative electrode current collector with irregularities by forming fine particles on the surface of the negative electrode current collector through the use of an electrolytic method in an electrolytic cell. A negative electrode lead part is attached to the positive electrode current collector.

Based on spot welding or ultrasonic welding, the positive electrode lead part can be attached to the positive electrode current collector. The positive electrode lead part is desirably net-like metal foil, but there is no need for the part to be a metal as long as the part is electrochemically and chemically stable and capable of achieving electrical continuity. Examples of the material for the positive electrode lead part can include, for example, aluminum (Al) and nickel (Ni). Based on spot welding or ultrasonic welding, the negative electrode lead part can be also attached to the negative electrode current collector. The negative electrode lead part is also desirably net-like metal foil, but there is no need for the part to be a metal as long as the part is electrochemically and chemically stable and capable of achieving electrical continuity. Examples of the material for the negative electrode lead part can include, for example, copper (Cu) and nickel (Ni).

As an electrolyte, NaPF₆, NaBF₄, NaAsF₆, NaClO₄, NaNO₃, NaOH, NaCl, Na₂SO₄, Na₂S, NaCF₃SO₃, NaN(SO₂CF₃)₂, and the like capable of sodium ion conduction can be used alone, or two or more thereof can be used in combination. In addition, a solvent such as ethylene carbonate, propylene carbonate, dimethyl carbonate, diethyl carbonate, ethyl methyl carbonate, methyl propyl carbonate, dipropyl carbonate, γ-butyl lactone, carbonate esters, and dimethyl sulfoxide, and fluid or non-fluid mixture compounds of polymer compounds such as polyether compounds, polyvinylidene fluoride, and polyacrylic acid compounds, with the electrolyte dissolved therein, can be used as a solvent that dissolves the foregoing electrolytes. The concentration of the electrolyte salt may be, for example, 0.5 mol/liter to 1.5 mol/liter as an example.

In addition, examples of the organic solvent can include cyclic carbonates such as ethylene carbonate (EC), propylene carbonate (PC) and butylene carbonate (BC); chain carbonates such as dimethyl carbonate (DMC), ethyl methyl carbonate (EMC), diethyl carbonate (DEC), dipropyl carbonate (DPC), propyl methyl carbonate (PMC), and propyl ethyl carbonate (PEC); cyclic ethers such as tetrahydrofuran (THF), 2-methyltetrahydrofuran (2-MeTHF), 1,3 dioxolane (DOL), and 4-methyl-1,3 dioxolane (4-MeDOL); chain ethers such as 1,2 dimethoxyethane (DME) and 1,2 diethoxyethane (DEE); cyclic esters such as γ-butyrolactone (GBL) and γ-valerolactone (GVL); and chain esters such as methyl acetate, ethyl acetate, propyl acetate, methyl formate, ethyl formate, propyl formate, methyl butyrate, methyl propionate, ethyl propionate, and propyl propionate. Alternatively, examples of the organic solvent can include tetrahydropyran, 1,3 dioxane, 1,4 dioxane, N,N-dimethylformamide (DMF), N,N-dimethylacetamide (DMA), N-methylpyrrolidinone (NMP), N-methyloxazolidinone (NMO), N,N'-dimethylimidazolidinone (DMI), dimethylsulfoxide (DMSO), trimethyl phosphate (TMP), nitromethane, (NM), nitroethane (NE), sulfolane (SL), methylsulfolane, acetonitrile (AN), anisole, propionitrile, glutaronitrile (GLN), adiponitrile (ADN), methoxyacetonitrile (MAN), 3-methoxypropionitrile (MPN), and diethyl ether. Alternatively, an ionic liquid can be also used. As the ionic liquid, a conventionally known ionic liquid can be used, and may be selected as necessary.

The electrolyte layer can be also composed of the nonaqueous electrolytic solution and a holding polymer compound. The nonaqueous electrolytic solution is held, for example, by a holding polymer compound. The thus configured electrolyte layer is a gel-like electrolyte, which achieves a high ion conductivity (for example, 1 mS/cm or more at room temperature), and prevents liquid leakage of the nonaqueous electrolytic solution. The electrolyte can be a liquid electrolyte or a gel-like electrolyte.

Specifically, examples of the holding polymer compound can include polyacrylonitrile, polyvinylidene fluoride, polytetrafluoroethylene, polyhexafluoropropylene, polyethylene oxide, polypropylene oxide, polyphosphazene, polysiloxane, polyvinyl fluoride (PVF), polychlorotrifluoroethylene (PCTFE), perfluoroalkoxy fluorine resin (PFA), tetrafluoroethylene-hexafluoropropylene copolymer (FEP), ethylene-tetrafluoroethylene copolymer (ETFE), ethylene-chlorotrifluoroethylene copolymer (ECTFE), polyvinyl acetate, polyvinyl alcohol, polymethyl methacrylate, polyacrylic acid, polymethacrylic acid, styrene-butadiene based rubbers, nitrile-butadiene based rubbers, polystyrene, polycarbonate, and vinyl chloride. These compounds may be used alone or in mixture. In addition, the holding polymer compound may be a copolymer. Specifically, examples of the copolymer can include a copolymer of vinylidene fluoride and hexafluoropyrene, and above all, from the viewpoint of electrochemical stability, polyvinylidene fluoride is preferred as a homopolymer, and a copolymer of vinylidene fluoride and hexafluoropyrene is preferred as a copolymer.

The positive electrode member and the negative electrode member can be wound many times with the separator interposed therebetween to obtain a spiral or flat-plate electrode stacked body. Alternatively, an electrode stacked body in a stacked state can be obtained by stacking the positive electrode member and the negative electrode member many times with the separator interposed therebetween.

Examples of the shape of the nonaqueous secondary battery can include a cylindrical type, a disc type, a coin type, a prism type, a flat type, a laminate type (laminate film type), and examples of an exterior body can include a bottomed cylindrical battery container (case), a bottomed prismatic battery container (case), and a laminated battery container (case) obtained by molding a laminate material of aluminum or the like and a resin film into a predetermined shape.

Examples of a material for the battery container (battery can) can include iron (Fe), nickel (Ni), aluminum (Al), and titanium (Ti), or alloys thereof, and stainless steel (SUS). The battery can is preferably plated, for example, with nickel or the like in order to prevent electrochemical corrosion associated with nonaqueous secondary battery charging/discharging. The exterior member in the case of a laminate-type (laminate film-type) nonaqueous secondary battery is preferably configured to have a laminated structure of a plastic material layer (fusion layer), a metal layer, and a plastic material layer (surface protective layer), that is, configured to be a laminate film. In the case of a laminate film-type nonaqueous secondary battery, the exterior member is folded so that the fusion layers are opposed to each other with the electrode stacked body interposed therebetween, and then outer circumferential edges of the fusion layers are subjected to fusion bonding to each other. However, the exterior member may have two laminate films bonded to each other with an adhesive or the like interposed therebetween. The fusion layer is composed of, for example, a film of an olefin resin such as polyethylene, polypropylene, modified polyethylene, modified polypropylene, or a polymer thereof. The metal layer is composed of, for example, aluminum foil, stainless steel foil, nickel foil, or the like. The surface protective layer is composed of, for example, nylon, polyethylene terephthalate or the like. Above all, the exterior member is preferably an aluminum laminate film of a polyethylene film, an aluminum foil, and a nylon film laminated in this order. However, the exterior member may be a laminate film that has another laminated structure, a polymer film such as polypropylene, or a metallic film.

The nonaqueous secondary battery according to the present disclosure can be used as a driving power supply or an auxiliary power supply for, for example, a personal computer, various types of display devices, a PDA (Personal Digital Assistant, portable information terminal), a cellular phone, a smartphone, a base unit or a slave unit for a cordless telephone, a video movie (a video camera or a camcorder), a digital still camera, an electronic paper such as an electronic book or an electronic newspaper, an electronic dictionary, a music player, a portable music player, a radio, a portable radio, a headphone, a headphone stereo, a game machine, a navigation system, a memory card, a cardiac pacemaker, a hearing aid, a power tool, an electric shaver, a refrigerator, an air conditioner, a television receiver, a stereo, a water heater, a microwave oven, a dishwasher, a washing machine, a dryer, lighting devices including interior lights, various types of electric devices (including portable electronic devices), a toy, a medical device, a robot, a road conditioner, a traffic light, a rail vehicle , a golf cart, an electric cart, an electric car (including hybrid car), or the like. In addition, the secondary battery can be mounted on a building such as a house or a power-storage power supply for a power generation facility, or the like, or can be used for supplying power to the building and the power supply. In the electric car, a conversion device that is supplied with electric power to convert the electric power to a driving force is generally a motor. Control devices that perform information processing related to vehicle control includes a control device that displays the remaining level of the secondary battery, based on information on the remaining level of the secondary battery. In addition, the secondary battery can be also used in an electric storage device in a so-called smart grid. Such an electric storage device can not only supply electric power, but also store electricity by being supplied with electric power from another electric power source. For example, thermal power generation, nuclear power generation, hydroelectric power generation, solar cells, wind power generation, geothermal power generation, fuel cells (including biofuel cells), and the like can be used as another electric power source.

The nonaqueous secondary battery according to the present disclosure can be applied to a nonaqueous secondary battery in a battery pack that has the nonaqueous secondary battery, a control means for control over the nonaqueous secondary battery, and an exterior including therein the nonaqueous secondary battery. In this battery pack, the control means controls, for example, charge/discharge, overdischarge or overcharge over the nonaqueous secondary battery.

The nonaqueous secondary battery according to the present disclosure can be applied to a nonaqueous secondary battery in an electronic device that receives power supply from the nonaqueous secondary battery.

The disclosed nonaqueous secondary battery according to the present disclosure can be applied to a nonaqueous secondary battery in an electric vehicle including a conversion device that is supplied with electric power from the nonaqueous secondary battery to convert the power to a driving force for the vehicle, and a control device that performs information processing related to vehicle control, based on information on the nonaqueous secondary battery. In this electric vehicle, the conversion device typically receives power supply from the nonaqueous secondary battery to drive the motor, and thus generate a driving force. Regenerative energy can be also used for driving the motor. In addition, the control device performs information processing related to vehicle control, for example, based on the remaining level of the nonaqueous secondary battery. The electric vehicle includes, for example, electric car, electric motorbikes, electric bicycles, and rail vehicles, as well as so-called hybrid cars.

The nonaqueous secondary battery according to the present disclosure can be applied to a nonaqueous secondary battery in an electric power system configured to receive power supply from the nonaqueous secondary battery and/or to supply electric power from an electric power source to the nonaqueous secondary battery. This electric power system may be any power system, including mere electric power devices, so long as the system is intended to use generally electric power. This electric power system includes, for example, a smart grid, a household energy management system (HEMS), a vehicle, which are also capable of electricity storage.

The nonaqueous secondary battery according to the present disclosure can be applied to a nonaqueous secondary battery in a power-storage power supply provided with a nonaqueous secondary battery, and configured to be connected to an electronic device that is supplied with electric power. Regardless of the application of the power-storage power supply, basically, the power supply can be used for any electric power system or electric power device, but, for example, can be used for smart grid.

### Example 1

Example 1 relates to a nonaqueous secondary battery (specifically, a sodium ion secondary battery), and a positive electrode active material for a nonaqueous secondary battery and a method for producing the material according to the present disclosure.

The positive electrode active material for a nonaqueous secondary battery according to Example 1, or various examples described below is composed of Na_{X}Fe_{Y}(SO₄)_{Z} (within the ranges of 0 < X ≤ 3, 1 ≤ Y ≤ 3, and 2 ≤ Z ≤ 4), and the surface is coated with a hydrogen group-containing carbonaceous layer.

In addition, the nonaqueous secondary battery (specifically, a sodium ion secondary battery) according to Example 1, or the various examples described below includes:
a positive electrode member including a positive electrode active material composed of Na_{X}Fe_{Y}(SO₄)_{Z} (within the ranges of 0 < X ≤ 3, 1 ≤ Y ≤ 3, and 2 ≤ Z ≤ 4), a conductive material, and a binder;
a negative electrode member including a negative electrode active material capable of inserting and desorbing sodium ions, and a binder; and
a separator, and
the surface of the positive electrode active material is coated with a hydrogen group-containing carbonaceous layer.

In this regard, Na_{X}Fe_{Y}(SO₄)_{Z} constituting the positive electrode active material is specifically composed of Na₂Fe₂(SO₄)₃ in Example 1, or in the various examples described below (except for Examples 6 and 7).

As just described, the positive electrode active material is composed of Na_{X}Fe_{Y}(SO₄)_{Z}, thereby making it possible to make an improvement in ion conductivity, and as a result, making it possible to make electrodes thicker than those of a lithium ion secondary battery. It is to be noted that the reaction rate limitation depends on the internal diffusion of sodium ions in the negative electrode member. Then, when a conduction pathway of sodium ions is established by initial charging, the cycle thereafter remains substantially in the same manner as lithium ions. In addition, the crystal structure of the positive electrode active material in Example 1 undergoes a small variation in crystal lattice spacing even during the insertion or desorption of sodium ions, and expands and shrinks as little as LiFePO₄ and the like. Therefore, charging/discharging proceeds without the collapse of the crystal structure, and a stable charging/discharging capacity can be maintained even when the charging/discharge cycle is repeated for a long period of time.

Further, the negative electrode active material is composed of hard carbon, or a NaTiO₂-based material, a NaFePO₄-based material or the like, thereby making it possible to provide a slightly larger spatial crystal structure capable of inserting sodium ions into voids of crystals of the negative electrode active material, and moreover desorbing sodium ions from the voids of the crystals of the negative electrode active material.

Hereinafter, a method for producing the positive electrode active material for a nonaqueous secondary battery according to Example 1, and a method for producing a nonaqueous secondary battery will be described. In this regard, the method for producing the positive electrode active material for a nonaqueous secondary battery according to Example 1 is a method for producing a positive electrode active material for a nonaqueous secondary battery, composed of Na_{X}Fe_{Y}(SO₄)_{Z} (within the ranges of 0 < X ≤ 3, 1 ≤ Y ≤ 3, and 2 ≤ Z ≤ 4), where the positive electrode active material with a surface coated with a hydrogen group-containing carbonaceous layer is obtained by coating the surface of the positive electrode active material with a carbon-based material, and then firing the carbon-based material at 400°C or lower in an inert gas atmosphere.

### [Step-100]

First, Na₂SO₄ and FeSO₄ ·7H₂O are weighed at 1 : 2 in molar ratio. Then, under room temperature, these are mixed while being dispersed in water containing 3% by mass of sucrose. Subsequently, while the water temperature is gradually raised, and maintained at 60°C for about 2 hours when the temperature reaches 60°C, mixing and stirring are continued. Next, the water temperature is raised up to 90°C, maintained for 1 hour, and after mixing and stirring, cooled to room temperature. Thereafter, in order to separate the solid from the mixed solution, after filtration, the solid was washed by dispersion in alcohol, thereafter, separated by filtration, and then lightly crushed to obtain a powdery solid (a powdery solid where the surface of the positive electrode active material is coated with a carbon-based material). Next, the powdery solid was put in a container made of alumina, and carried into a drying system, and the temperature was raised up to 200°C, and dried at 200°C for 12 hours while flowing dry air. Then, the solid was carried into an electric furnace, and while flowing a nitrogen gas, heated up to 300°C at a rate of temperature rise of 5°C/min and maintained at 300°C for 6 hours, and further, the temperature was raised up to 350°C at 5°C/min and maintained at 350°C for 12 hours, and further raised up to 380°C at 5°C/min and maintained at 380°C for 12 hours. Then, thereafter, the temperature was lowered at 5°C/min, for cooling to around room temperature. In this way, it was possible to obtain a positive electrode active material with a surface coated with a hydrogen group-containing carbonaceous layer (so-called half-baked carbonaceous layer with co-existence of carbon with hydrogen). Preferred firing conditions can include a temperature of 500°C or lower, preferably a temperature of 400°C or lower, more preferably a temperature of 300°C to 400°C, for 12 hours to 24 hours in an inert gas atmosphere in order to prevent the oxidation of sodium.

The powdered positive electrode active material was black in color, and presumed to have sucrose carbonized. More specifically, the surface layer of the positive electrode active material was presumed to have a conductive carbonaceous layer formed. When the positive electrode active material was exposed to the atmosphere with normal humidity, water droplets adhered to the surface through moisture absorption with time. This is presumed to be a compound formed by reacting with moisture in the atmosphere, since the positive electrode active material is a compound containing Na. It is to be noted that the positive electrode active material produced on the basis of a solution containing no sucrose exhibited a color close to milky white.

In a glove box filled with a nitrogen gas, the positive electrode active material was transferred to an agate mortar, and subjected to grinding and stirring. Then, X-ray diffraction data (XRD data) on the positive electrode active material was collected with the use of an X-ray diffractometer. From the XRD data of, it was possible to presume the material to be a compound in agreement with the X-ray diffraction peak disclosed in Nature Comm. 20140717. More specifically, obtained was the result that the material has a diffraction peak that can be approximated by the crystal structure of Na₂Fe₂(SO₄)₃. The full width at half maximum for a peak in the vicinity of 2θ = 14 degrees in X-ray diffraction of the positive electrode active material with the use of the Cu-Kα ray was 0.5 degrees or more, specifically, 0.5 degrees to 0.7 degrees.

### [Step-110]

Then, 91.5 parts by mass of the positive electrode active material, 3.5 parts by mass of a conductive material composed of Ketjen black (KB), and 5 parts by mass of a binder composed of polyvinylidene fluoride (PVDF) were weighed and mixed in a glove box filled with a nitrogen gas. Then, N-methyl-2-pyrrolidone (hereinafter abbreviated as "NMP") was added as a diluent solvent to obtain a positive electrode combination in a slurry form with a solid content of 50% by mass. Subsequently, the positive electrode combination was applied to one side of a positive electrode current collector made of 15 µm thick aluminum foil, and subjected to dilute solvent drying, thereby providing a positive electrode combination layer with a uniform thickness. Likewise, a positive electrode combination layer was formed on the other side of the positive electrode current collector. It is to be noted that on each side (one side) of the positive electrode current collector, the positive electrode combination was applied so that the thickness of the positive electrode combination layer was 170 µm after pressure forming. It is to be noted that the phrase "the positive electrode combination or the negative electrode combination was applied so that the thickness of the positive electrode combination layer or the negative electrode combination layer was L µm after pressure forming" means that the thickness of the positive electrode combination or the negative electrode combination is L µm with a positive electrode member or a negative electrode member incorporated in a nonaqueous secondary battery. The positive electrode member composed of the positive electrode current collector and the positive electrode combination layer was cut into predetermined width and length, and a positive electrode lead part made of aluminum was welded to an end to form a positive electrode member.

### [Step-120]

On the other hand, with the use of, as a negative electrode active material, a carbon material composed of non-graphitizable carbon (hard carbon) obtained by firing an organic substance, 95 parts by mass of the carbon material and 5 parts by mass of a binder composed of sodium polyacrylate (PAcNa) were mixed, and NMP as a diluent solvent was added to the mixture so that the solid content was 50% by mass, thereby providing a negative electrode combination in a slurry form. Then, the negative electrode combination was applied to one side of a negative electrode current collector made of 10 µm thick copper foil, and subjected slowly to dilute solvent drying, thereby providing a negative electrode combination layer with a uniform thickness. Likewise, a negative electrode combination layer was formed on the other side of the negative electrode current collector. It is to be noted that on each side (one side) of the negative electrode current collector, the negative electrode combination was applied so that the thickness of the negative electrode combination layer was 160 µm after pressure forming. The negative electrode member composed of the negative electrode current collector and the negative electrode combination layer was cut into predetermined width and length, and a negative electrode lead part made of nickel was welded to an end to form a negative electrode member.

### [Step-130]

The positive electrode member and the negative electrode member were wound many times with a separator interposed therebetween, thereby providing a spiral electrode stacked body. In this regard, the separator is composed of a polyolefin-based material with pores (specifically, microporous polyethylene (PE) of 25 µm in thickness), and an inorganic compound powder layer of 5 µm in thickness with sodium ion conductivity is formed on both sides of the separator. The inorganic compound powder layer is composed of β-alumina.

FIG. 16 shows therein a schematic cross-sectional view of a cylindrical nonaqueous secondary battery (sodium ion secondary battery) according to Example 1. In the nonaqueous secondary battery according to Example 1, an electrode stacked body 20 and a pair of insulating plates 12, 13 are housed in a substantially hollow cylindrical battery can 11.

The battery can 11 has a hollow structure with one end closed and the other end opened, which is fabricated from iron (Fe), aluminum (Al), or the like. The surface of the battery can 11 may be plated with nickel (Ni) or the like. The pair of insulating plates 12, 13 is disposed so as to sandwich the electrode stacked body 20, and extend perpendicularly to the wound circumferential surface of the electrode stacked body 20. The open end of the battery can 11 has a battery cover 14, a safety valve mechanism 15, and a thermosensitive resistive element (PTC element, Positive Temperature Coefficient element) 16 crimped thereto via a gasket 17, thereby making the battery can 11 hermetically sealed. The battery cover 14 is fabricated from, for example, the same material as the battery can 11. The safety valve mechanism 15 and the thermosensitive resistive element 16 are provided inside the battery cover 14, and the safety valve mechanism 15 is electrically connected to the battery cover 14 via the thermosensitive resistive element 16. The safety valve mechanism 15 has a disk plate 15A that is inverted when the internal pressure is equal to or higher than a certain level due to internal short circuit, external heating, or the like. Then, the electrical connection between the battery cover 14 and the electrode stacked body 20 is thus disconnected. In order to prevent abnormal heat generation due to large current, the resistance of the thermosensitive resistive element 16 increases in response to an increase in temperature. The gasket 17 is fabricated from, for example, an insulating material. Asphalt or the like may be applied to the surface of the gasket 17.

A center pin 18 is inserted into the winding center of the electrode stacked body 20. However, there is no need for the center pin 18 to be inserted into the winding center. A positive electrode lead part 23 fabricated from a conductive material such as aluminum is connected to the positive electrode member 22. A negative electrode lead part 25 fabricated from a conductive material such as copper is connected to the negative electrode member 24. The negative electrode lead part 25 is welded to the battery can 11, and electrically connected to the battery can 11. The positive electrode lead part 23 is welded to the safety valve mechanism 15, and electrically connected to the battery cover 14. It is to be noted that the negative electrode lead part 25 is located at one site (the outermost circumferential part of the electrode stacked body wound) in the example shown in FIG. 16, but may be provided at two sites (the outermost circumferential part and innermost circumferential part of the electrode stacked body wound) in some cases. Inside the battery can 11, a mixed solution of propylene carbonate : diethyl carbonate = 1: 1 with 1 mol/liter of NaPF₆ dissolved therein is injected as an electrolytic solution.

The sodium ion secondary battery can be produced, for example, in accordance with the following procedure. More specifically, first, as described above, the positive electrode member 22 and the negative electrode member 24 were wound many times with a separator 26 interposed therebetween, thereby providing a spiral electrode stacked body. Thereafter, the center pin 18 is inserted into the center of the electrode stacked body 20. Then, while the electrode stacked body 20 is sandwiched by the pair of insulating plates 12, 13, the electrode stacked body 20 is housed inside the battery can 11. In this case, with the use of a welding method or the like, a tip of the positive electrode lead part 23 is attached to the safety valve mechanism 15, and a tip of the negative electrode lead part 25 is attached to the battery can 11. Thereafter, an electrolytic solution is injected into the electrode stacked body 20 in accordance with a depressurization method, thereby impregnating the separator 26 with the electrolytic solution. Then, the battery cover 14, the safety valve mechanism 15, and thermosensitive resistive element 16 are crimped to the opening end of the battery can 11 via the gasket 17.

The above-mentioned separator can be fabricated by the following method. More specifically, dried anhydrous calcium chloride was dissolved in NMP to prepare a 6% by mass calcium chloride solution. Then, a fibrous aromatic polyamide resin (hereinafter referred to as an "aramid resin") was added to the NMP solution of calcium chloride to prepare an NMP solution of aramid resin. Subsequently, an aramid solution of β-alumina (NaO-Al₂O₃) dispersed was prepared by adding β alumina to the NMP solution of aramid resin so as to meet aramid resin : alumina = 40 : 60 (mass ratio). Then, the aramid solution of β-alumina dispersed was applied onto one side of microporous polyethylene of 25 µm in thickness with the use of a doctor blade (a device for applying a combination), and dried with hot air at 80°C, thereby forming an inorganic compound powder layer of 5 µm in thickness composed of β-alumina. Further, in accordance with the same method, an inorganic compound powder layer of 5 µm in thickness composed of β-alumina was formed on the other side of the microporous polyethylene. Then, the inorganic compound powder layers were sufficiently washed with pure water to remove calcium chloride, and at the same time, form fine pores in the inorganic compound powder layers, and dried. In this way, it was possible to obtain a heat-resistant separator with inorganic compound powder layers of 5 µm in thickness formed on both sides of microporous polyethylene.

The use of such a separator provided with inorganic compound powder layers with sodium ion conductivity on both sides (specifically, inorganic compound powder layers composed of β-alumina) makes it possible to achieve charging/charging with a heavy load (large current). In addition, as a result of being capable of suppressing the increase in internal resistance in the charge/discharge cycle, a long-term cycle life can be achieved, and the internal resistance of the nonaqueous secondary battery can be reduced. Thus, in the case of connecting a large number of nonaqueous secondary batteries in series, the resistive loss can be reduced, and the battery capacity can be further increased in the case of an assembled battery. Moreover, even when an abnormality occurs within the nonaqueous secondary battery (cell), because the separator has heat resistance, the adverse influence on the nonaqueous secondary batteries other than the nonaqueous secondary battery with the abnormality can be reduced, thereby enhancing safety of the assembled battery.

Micropores were randomly formed in the inorganic compound powder layers composed of β-alumina, and as a result of observing a cross section of the separator with a scanning electron microscope (SEM), the average pore size was about 0.7 µm, and the porosity was about 50%. In addition, as a result of measuring the particle size distribution of the β-alumina used with a particle analyzer, it has been confirmed that the particle size distribution ranges from 0.1 µm to 2 µm, with a peak in the particle size distribution. The 50% particle size was 0.5 µm. The particle size of β-alumina to be used may be determined in consideration of the thickness of the inorganic compound powder layer to be formed and the desired heat resistance. It is to be noted that the inorganic compound powder layers include therein the fibrous aramid resin, thereby making it possible to obtain inorganic compound powder layers with micropores.

The nonaqueous secondary battery fabricated was subjected to CC-CV (constant current-constant voltage) charge with a charging current of 0.5 amperes and an upper limit voltage of 4.1 volts. Then, a charge/discharge test was carried out with a discharging current of 0.5 amperes and a cutoff voltage of 2.5 volts. It is to be noted that also in the following examples and comparative examples, charge/discharge tests were carried out under the same conditions.

### [Comparative Example 1A]

In accordance with Comparative Example 1A, a powdery solid where the surface of a positive electrode active material was coated with a carbon-based material was obtained in the same manner as in Example 1. Then, in the same manner as in Example 1, the powdered solid was put in a container made of alumina, carried into a drying system, and after a temperature rise up to 200°C, dried while flowing air at 200°C for 12 hours. Subsequently, the solid was carried into an electric furnace, heated up to 300°C at a rate of temperature rise of 5°C/min while flowing a nitrogen gas, and kept at 300°C for 6 hours. The foregoing operation is carried out in the same way as in Example 1.

Thereafter, unlike Example 1, the temperature was raised up to 500°C at 5°C/min and then maintained at 500°C for 12 hours, and further raised to 600°C at 5°C/min and then maintained at 600°C for 12 hours. Thereafter, thereafter, the temperature was lowered at 5°C/min, for cooling to around room temperature. In this way, the positive electrode active material according to Comparative Example 1A was obtained. The powdered positive electrode active material was black in color, and presumed to have sucrose carbonized. More specifically, it was possible to assume the surface layer of the positive electrode active material to have a conductive carbonaceous layer formed.

XRD data on the positive electrode active material according to Comparative Example 1A was collected in the same manner as in Example 1. As a result, obtained was the result that the material has a diffraction peak that can be approximated by the crystal structure of Na₂Fe₂(SO₄)₃. However, the full width at half maximum for a peak in the vicinity of 20 = 14 degrees in X-ray diffraction of the positive electrode active material according to Comparative Example 1A with the use of the Cu-Kα ray was less than 0.3 degrees (specifically, 0.28 degrees) unlike Example 1. Then, based on the positive electrode active material according to Comparative Example 1A, a nonaqueous secondary battery was fabricated in the same manner as in Example 1.

### [Comparative Example 1B]

In accordance with Comparative Example 1B, first, Na₂SO₄ and FeSO₄·7H₂O are weighed at 1 : 2 in molar ratio. Then, under room temperature, these were mixed while being dispersed in water with Ketjen black (KB) dispersed therein unlike Example 1. Subsequently, in the same manner as in Example 1, a positive electrode active material according to Comparative Example 1B was obtained.

XRD data on the positive electrode active material according to Comparative Example 1B was collected in the same manner as in Example 1. As a result, obtained was the result that the material has a diffraction peak that can be approximated by the crystal structure of Na₂Fe₂(SO₄)₃. In addition, an X-ray diffraction peak for the Ketjen black (KB) was measured. The full width at half maximum for a peak in the vicinity of 20 = 14 degrees in X-ray diffraction of the positive electrode active material according to Comparative Example 1B with the use of the Cu-Kα ray was less than 0.3 degrees (specifically, 0.29 degrees) unlike Example 1. Then, based on the positive electrode active material according to Comparative Example 1B, a nonaqueous secondary battery was fabricated in the same manner as in Example 1.

### [Comparative Example 1C]

In accordance with Comparative Example 1C, first, Na₂SO₄ and FeSO₄·7H₂O are weighed at 1 : 2 in molar ratio, in the same manner as in Comparative Example 1B. Then, under room temperature, these were mixed while being dispersed in water with Ketjen black (KB) dispersed therein unlike Example 1. Then, unlike Comparative Example 1B, a positive electrode active material according to Comparative Example 1C was obtained in the same manner as in Comparative Example 1A.

XRD data on the positive electrode active material according to Comparative Example 1C was collected in the same manner as in Example 1. As a result, obtained was the result that the material has a diffraction peak that can be approximated by the crystal structure of Na₂Fe₂(SO₄)₃. In addition, an X-ray diffraction peak for the Ketjen black (KB) was measured. The full width at half maximum for a peak in the vicinity of 20 = 14 degrees in X-ray diffraction of the positive electrode active material according to Comparative Example 1C with the use of the Cu-Kα ray was less than 0.3 degrees unlike Example 1. Then, based on the positive electrode active material according to Comparative Example 1C, a nonaqueous secondary battery was fabricated in the same manner as in Example 1.

For the nonaqueous secondary batteries according to Example 1, Comparative Example 1A, Comparative Example 1B, and Comparative Example 1C, FIG. 1A shows therein initial charge/discharge curves (the horizontal axis indicates a capacity (unit: milliampere • hour/gram), whereas the horizontal axis indicates a voltage (unit: volt)), FIG. 1B shows therein the result of examining the relationship between the number of charge/discharge cycles and the discharge capacity retention rate (%), and FIG. 2 shows therein the result of examining the relationship between the load current (unit: milliampere/cm²) and the capacity (unit: milliampere • hour/gram). From FIGS. 1A, 1B, and 2, it is determined that the nonaqueous secondary battery according to Example 1 exhibits excellent charge/discharge characteristics as compared with the nonaqueous secondary batteries according to Comparative Example 1A, Comparative Example 1B, and Comparative Example 1C, and can maintain a stable discharge capacity even when the charge/discharge cycle is repeated for a long period of time.

FIG. 3A (Example 1) and FIG. 3B (Comparative Example 1A) show therein the results of checking whether the carbonaceous layer contains a hydrogen group or not, in accordance with reflective infrared spectroscopy. In FIG. 3A showing the result of Example 1, the absorption derived from "C-H" vibration was clearly observed in the vicinity of 2800 cm⁻¹. On the other hand, in FIG. 3B showing the result of Comparative Example 1A, the absorption derived from "C-H" vibration is not clearly observed in the vicinity of 2800 cm⁻¹. More specifically, it can be determined that a hydrogen group-containing carbonaceous layer is formed in accordance with Example 1, whereas it is not possible to determine that a hydrogen group-containing carbonaceous layer is formed in accordance with Comparative Example 1A. It is to be noted that in each case of Example 1 and Comparative Example 1A, the absorption derived from "C=C" vibration was observed at 1000 cm⁻¹ to 800 cm⁻¹. In addition, also in accordance with Comparative Example 1B and Comparative Example 1C, the absorption derived from "C-H" vibration was not clearly observed in the vicinity of 2800 cm⁻¹.

The peak (peak intensity: I₁₅₈₀) centered at 1580 cm⁻¹, measured in a Raman spectroscopic spectrum obtained with the use of argon laser light with a wavelength of 513 nm, is supposed to indicate that hexagonal net surfaces of graphite are regularly laminated. On the other hand, the peak (peak intensity: I₁₃₆₀) centered at 1360 cm⁻¹ is supposed to indicate collapse of the hexagonal net surfaces laminated, and the collapse of the hexagonal net surfaces laminated proceeds, when viewed from the sodium ion, at an end surface of the hexagonal net surfaces laminated. In this regard, when the R value (= I₁₃₆₀/I₁₅₈₀) falls below 0.65 (that is, when the peak intensity I₁₃₆₀ is relatively lower with respect to the peak intensity I₁₅₈₀), the ratio of the end surface is decreased, and the regularity is increased. On the other hand, when the R value (= I₁₃₆₀/I₁₅₈₀) exceeds 1.00 (that is, when the peak intensity I₁₃₆₀ is higher than the peak intensity I₁₅₈₀), the hexagonal net surfaces have an irregular and disordered structure form. More specifically, the disorder of the hexagonal net surfaces laminated is increased, thereby as a result, allowing for insertion and desorption reactions of sodium ions with a large ion radius.

FIG. 4A shows therein a Raman spectroscopic spectrum for the positive electrode active material according to Example 1, and FIG. 4B shows therein a Raman spectroscopic spectrum for the positive electrode active material according to Comparative Example 1A. Example 1 is, because the carbonaceous layer contains a hydrogen group (that is, carbon and hydrogen are mixed), considered to have no hexagonal net surfaces developed, and have a partially irregular carbonaceous layer (carbonaceous coating layer) formed with graphite crystallinity disordered due to hydrogen residues. On the other hand, Comparative Example 1A exhibits high crystallinity. When the sucrose was subjected to firing under the same conditions as the conditions for the production of the positive electrode active material according to Example 1, the residual ratio between carbon and hydrogen was an element ratio of 94 : 6. On the other hand, in the positive electrode active material according to Example 1, the residual ratio between carbon and hydrogen is considered to fall within the range of the element ratio from 95 : 5 to 92 : 8.

In the nonaqueous secondary battery according to Example 1,
Positive Electrode Combination Thickness = 170 µm,
Negative Electrode Combination Thickness = 160 µm, and
(Thickness of Separator) × 6 = 150 µm, and
Positive Electrode Combination Thickness > Negative Electrode Combination Thickness (A), and Negative Electrode Combination Thickness > (Thickness of Separator) × 6
are satisfied. In addition, Area of Separator > Area of Negative Electrode Member > Area of Positive Electrode Member, or Width of Separator > Width of Negative Electrode Member > Width of Positive Electrode Member is met.

### [Comparative Example 1D]

In accordance with Comparative Example 1D, the positive electrode combination thickness and the negative electrode combination thickness (unit: µm) in Example 1 were changed as in Table 1 below. In Table 1, "Thickness A" represents "(Thickness of Separator) × 6".

**<Table 1>**

| | Comparative Example 1D-1 | Comparative Example 1D-2 | Comparative Example 1D-3 |
|---|---|---|---|
| Positive Electrode Combination Thickness | 120 | 160 | 110 |
| Negative Electrode Combination Thickness | 110 | 170 | 120 |
| Thickness A | 150 | 150 | 150 |

Comparative Example 1D-1 fails to satisfy the formula (B). Comparative Example 1D-2 fails to satisfy the formula (A). Comparative Example 1D-3 fails to satisfy the formula (A) and the formula (B).

For the nonaqueous secondary batteries according to Example 1, Comparative Example 1D-1, Comparative Example 1D-2 and Comparative Example 1D-3, FIG. 5A shows therein the result of examining the relationship between the discharging current (unit: ampere) and the discharged capacity (unit: ampere • hour), and FIG. 5B shows therein the result of examining the relationship between the number of charge/discharge cycles and the capacity (unit: ampere • hour). It is determined that the nonaqueous secondary battery according to Example 1 has better characteristics than the nonaqueous secondary batteries according to Comparative Example 1D-1, Comparative Example 1D-2, and Comparative Example 1D-3. In addition, it is also determined that when the formula (B) is not satisfied, the characteristics are degraded significantly.

### [Modified Example of Example 1]

For the production of a positive electrode active material, the powdery solid was carried into an electric furnace, and while flowing a nitrogen gas, heated up to 300°C at a rate of temperature rise of 5°C/min and maintained at 300°C for 6 hours, and further, the temperature was raised up to 350°C at 5°C/min and maintained at 350°C for 12 hours. Thereafter, without raising the temperature to 380°C, the temperature was immediately lowered at 5°C/min, for cooling to around room temperature, thereby providing a positive electrode active material according to the modified example of Example 1. The full width at half maximum for a peak in the vicinity of 20 = 14 degrees in X-ray diffraction of the obtained positive electrode active material according to the modification example of Example 1 with the use of the Cu-Kα ray was greater than 0.4 degrees. The absorption derived from "C-H" vibration was clearly observed in the vicinity of 2800 cm⁻¹. Then, a nonaqueous secondary battery was fabricated based on the positive electrode active material according to the modified example of Example 1, and subjected to characteristic evaluation, thereby providing characteristics comparable to those of the nonaqueous secondary battery according to Example 1 described above.

In addition, even with the use of another material, Na₂Fe(SO₄)₃, Na₂Fe(SO₄)₄, or Na₃Fe(SO₄)₃ as the positive electrode active material, it was possible to obtain a similar result to those for Na₂Fe₂(SO₄)₃.

### [Another Modification Example of Example 1]

The negative electrode active material was composed of NaTiO₂ or NaFePO₄. Then, a so-called rocking-chair type nonaqueous secondary battery was fabricated, where a positive electrode member and a negative electrode member were configured in the same fashion. Except for the configurations of the positive electrode active material and the negative electrode active material, the configuration and structure of the nonaqueous secondary battery are the same as those of the nonaqueous secondary battery according to Example 1. Then, the nonaqueous secondary battery fabricated was subjected to CC-CV (constant current-constant voltage) charge with a charging current of 0.5 amperes and an upper limit voltage of 3.5 volts. Then, a charge/discharge test was carried out with a discharging current of 0.5 amperes and a cutoff voltage of 1.5 volts. As a result, cycle performance was achieved which was comparable to that of the nonaqueous secondary battery according to Example 1. It is to be noted that 2/3 the charged/discharged capacity of the nonaqueous secondary battery according to Example 1 was obtained as a charged/discharged capacity. In addition, the average voltage was 0.5 volt lower than that of the nonaqueous secondary battery according to Example 1.

The nonaqueous secondary battery (specifically, sodium ion secondary battery) according to Example 1, the positive electrode active material for a nonaqueous secondary battery according to Example 1, and the positive electrode active material obtained by the method for producing a positive electrode active material for a nonaqueous secondary battery according to Example 1 have surfaces coated with a hydrogen group-containing carbonaceous layer. Therefore, conductivity can be imparted to the positive electrode active material, and the insertion and desorption of sodium ions into the positive electrode active material is unlikely to be inhibited by the carbonaceous layer, thereby making it possible to achieve a smooth reaction. As a result, the collapse of the crystal structure of the positive electrode active material can be suppressed. In addition, stabilization of the crystal can be achieved even in the case of charge/discharge with a large current, thereby achieving excellent long-term reliability. On the other hand, when the surface is coated with a carbonaceous layer containing no hydrogen group as in Comparative Example 1A, Comparative Example 1B, and Comparative Example 1C, the arrangement between crystal layers of the positive electrode active material is fixed by such a carbonaceous layer, and the desorption of sodium ions makes the crystal layers of the positive electrode active material unstable, thereby making the crystal more likely to collapse.

Moreover, a nonaqueous secondary battery containing no rare element can be achieved, thereby eliminating restrictions on resources. In addition, sodium ions can be used in nonaqueous secondary batteries, thereby achieving high-energy density nonaqueous secondary batteries. Moreover, a nonaqueous secondary battery that uses no metallic sodium can be obtained, thus ensuring high safety. In addition, the positive electrode active material can be produced with less energy as compared with conventional lithium (Li), which is economically advantageous. Moreover, the charging/discharging voltage falls within a range that is compatible with a lithium ion secondary battery, thus making it possible to achieve a nonaqueous secondary battery that is usable mutually for the lithium ion secondary battery. Therefore, the nonaqueous secondary battery can take over the previous design elements, utilize the control and design assets, and make itself useful for a battery pack (assembled battery) under substantially equivalent conditions of use.

### Example 2

Example 2 is a modification of Example 1. In accordance with Example 2, a positive electrode member was fabricated in the same manner as in Example 1. However, instead of 3 parts by mass of Ketjen black (KB), 3 parts by mass of vapor grown carbon fiber was used as the conductive material.

On the other hand, with the use of, as a negative electrode active material, a carbon material composed of non-graphitizable carbon (hard carbon) obtained by firing an organic substance, 95 parts by mass of the carbon material, 4.5 parts by mass of a binder composed of sodium polyacrylate (PAcNa), and 0.5 parts by mass of a binder composed of carboxymethyl cellulose (CMC) were mixed, and NMP as a diluent solvent was added to the mixture so that the solid content was 50% by mass, thereby providing a negative electrode combination in a slurry form. Then, a negative electrode member was fabricated in the same manner as in Example 1. Further, a nonaqueous secondary battery according to Example 2A was obtained in the same manner as in Example 1, with the use of the foregoing negative electrode member and the positive electrode member according to Example 2.

In addition, a nonaqueous secondary battery according to Example 2B was obtained in the same manner as in Example 1, with the use of the positive electrode member composed of the positive electrode active material mentioned above and the negative electrode member described in Example 1 (with the binder composed of 5 parts by mass of sodium polyacrylate (PAcNa)).

### [Comparative Example 2]

In accordance with Comparative Example 2, polyvinylidene fluoride (PVDF) was used as a binder constituting a negative electrode member. More specifically, according to Comparative Example 2, with the use of non-graphitizable carbon (hard carbon) as a negative electrode active material, 95 parts by mass of the negative electrode active material and 5 parts by mass of the binder composed of polyvinylidene fluoride (PVDF) were used, and mixed with the addition of NMP thereto as a dilute solvent, thereby providing a negative electrode compound in a slurry form with a solid content of 50% by mass. Then, a negative electrode member was fabricated in the same manner as in Example 2A. Further, a nonaqueous secondary battery according to Comparative Example 2 was obtained in the same manner as in Example 1, with the use of the foregoing negative electrode member and the positive electrode member according to Example 2.

For the nonaqueous secondary batteries according to Example 2A, Example 2B, and Comparative Example 2, FIG. 6A shows therein the result of examining the relationship between the discharging current (unit: ampere) and discharged capacity (unit: ampere • hour), and FIG. 6B shows therein the result of examining the relationship between the number of charge/discharge cycles and the capacity (unit: ampere • hour). The nonaqueous secondary batteries according to Example 2A and Example 2B, obtained with the use of PAcNa and CMC or PAcNa as the binder constituting the negative electrode member, can be charged and discharged stably. On the other hand, the nonaqueous secondary battery according to Comparative Example 2, obtained with the use of PVDF as the binder constituting the negative electrode member, was found to undergo a decrease in discharged capacity, when a large discharging current is applied, or when the charge/discharge cycle is repeated for a long period of time.

### Example 3

Example 3 is also a modification of Example 1. In accordance with Example 3, a negative electrode active material is composed of Na_{P}M_{Q}TiO_{R} (where 0 < P < 0.5, 0 < Q < 0.5, 1 ≤ R ≤ 2, M represents an alkali metal element other than Na). Specifically, Na_{P}M_{Q}TiO_{R} is Na_{1.6}Li_{1.6}K_{0.8}Ti₅O₁₂ (P = 0.32, Q = 0.48, R = 2.4, M represents lithium (Li) and potassium (K)).

In accordance with Example 3, first, a positive electrode active material was obtained in the same manner as in Example 1. Then, 92 parts by mass of the positive electrode active material, 3 parts by mass of a conductive material composed of Ketjen black (KB), and 5 parts by mass of a binder composed of polyvinylidene fluoride (PVDF) were weighed and mixed in a glove box filled with a nitrogen gas. Then, NMP was added as a diluent solvent to obtain a positive electrode combination in a slurry form with a solid content of 50% by mass. Subsequently, a positive electrode member was obtained in the same manner as in Example 1.

On the other hand, as a negative electrode active material, a solution of 0.4 mol of lithium hydroxide, 0.4 mol of sodium hydroxide, and 0.2 mol of potassium hydroxide dissolved in pure water, with 1 mol of anatase-type titanium oxide put therein, was stirred and dried. Then, this mixture was put into an alumina container, transferred into an electric furnace in the atmosphere, and subjected to a firing treatment by raising the temperature at 5°C/min and maintaining the temperature at 780°C for 10 hours, thereby providing a spinel-type sodium-lithium-potassium-titanium composite oxide (Na_{1.6}Li_{1.6}K_{0.8}Ti₅O₁₂) with a ratio of Na : Li : K = 0.4 : 0.4 : 0.2, and the oxide was then transferred to an agate mortar, and crushed and stirred.

It is to be noted that Na_{P}M_{Q}TiO_{R} which is a negative electrode active material may be subjected to firing at 680°C or higher and 1000°C or lower for 1 hour or longer and 24 hours or shorter, preferably 720°C or higher and 800°C or lower for 5 hours or longer for 10 hours or shorter. In addition, the firing atmosphere may be provided in the atmosphere, or in an inert gas atmosphere such as an oxygen atmosphere, a nitrogen atmosphere, or an argon atmosphere. The content ratio "Q" of Li and the like can be appropriately adjusted.

X-ray diffraction data (XRD data) on the obtained powder (positive electrode active material) was collected with the use of an X-ray diffractometer. The result is shown in the chart of FIG. 7.

A negative electrode mixture in a slurry form with a solid content of 50% by mass was obtained by mixing 90 parts by mass of the negative electrode active material, 5 parts by mass of a conductive material composed of Ketjen black (KB) and 4.5 parts by mass of carboxymethyl cellulose as a binder, with the addition of a 5% aqueous solution of carboxymethyl cellulose (CMC)/sodium polyacrylate ion as a dilute solvent. Then, the negative electrode combination was applied to one side of a negative electrode current collector made of 10 µm thick copper foil, and subjected slowly to dilute solvent drying, thereby providing a negative electrode combination layer with a uniform thickness. Likewise, a negative electrode combination layer was formed on the other side of the negative electrode current collector. The negative electrode member composed of the negative electrode current collector and the negative electrode combination layer was cut into predetermined width and length, and a negative electrode lead part made of nickel was welded to an end to form a negative electrode member.

Then, a nonaqueous secondary battery according to Example 3 was obtained in the same manner as in Example 1, with the use of the foregoing negative electrode member and positive electrode member. The obtained nonaqueous secondary battery according to Example 3 has achieved characteristics comparable to those of the nonaqueous secondary battery according to Example 1 described above.

The Na_{P}M_{Q}TiO_{R} has, as a NASICON material, excellent characteristics as a negative electrode active material that can insert and desorb sodium ions, and serves as an excellent material capable of smoothly diffusing, desorbing, and inserting sodium ions during charge/discharge with an alkali metal inserted into the titanic acid in advance, and moreover, capable of charge/discharge without the precipitation of sodium ions. More specifically, as compared with carbon negative electrodes, there is no precipitation of Na during rapid large-current charging or low-temperature charging, thereby making it possible to make the cycle life longer. This is because the diffusion of sodium ions into Na_{P}M_{Q}TiO_{R} takes place promptly, thus making the precipitation of sodium unlikely to occur.

Based on the positive electrode active material according to the modification example of Example 1, a positive electrode member was obtained in the same manner as in Example 3. Then, based on this positive electrode member, a nonaqueous secondary battery was obtained in the same manner as in Example 3. The obtained nonaqueous secondary battery has achieved characteristics comparable to those of the nonaqueous secondary battery according to Example 1 described above. In addition to Na_{P}M_{Q}TiO_{R}, compounds that can insert and desorb sodium ions, such as hard carbon and Si, Si·SiO_{X}, and Sn compounds, can be used as the negative electrode active material, and in some cases, graphite carbon and the like can be also used. Even the nonaqueous secondary batteries obtained in the same manner as in Example 1 with the use of the negative electrode members obtained, based on the foregoing materials and the positive electrode member according to Example 3 have achieved similar characteristics to those of the nonaqueous secondary battery according to Example 1 described above.

### Example 4

Example 4 is a modification of Example 3. In accordance with Example 4, a positive electrode member was obtained in the same manner as in Example 3.

In addition, 90 parts by mass of the negative electrode active material described in Example 3, 5 parts by mass of a conductive material composed of Ketjen black (KB), and 5 parts by mass of a binder composed of sodium polyacrylate (PAcNa) were weighed and mixed in a draft chamber. Then, a 5% aqueous solution of carboxymethyl cellulose (CMC) was added as a dilute solvent to obtain a negative electrode combination in a slurry form with a solid content of 50% by mass. Then, a negative electrode member was fabricated in the same manner as in Example 1.

Then, a nonaqueous secondary battery according to Example 4 was obtained in the same manner as in Example 1, with the use of the foregoing negative electrode member and positive electrode member. The obtained nonaqueous secondary battery according to Example 4 has achieved characteristics comparable to those of the nonaqueous secondary battery according to Example 1 described above.

### [Comparative Example 4A]

In accordance with Comparative Example 4A, Na ₂CO₃ and Co₃O₄ were weighed at an element ratio of 1 : 1, mixed in a mortar, then out in a container made of alumina, subjected to a temperature rise at 5°C/min in the atmosphere and kept at 900°C for 12 hours, and then cooled to room temperature while flowing a CO₂ gas, thereby providing a positive electrode active material. Thereafter, the material was crushed lightly and then subjected to grinding in a mortar. The powder (positive electrode active material) was subjected to measurement by an X-ray diffractometer to obtain a diffraction pattern, and acquire diffraction peak data. The comparison with the peak diffraction intensity value of JCPDS has confirmed that the foregoing pattern is a diffraction pattern in agreement with NaCoO₂. Then, with the use of this positive electrode active material, a nonaqueous secondary battery was obtained in the same manner as in Example 4.

### [Comparative Example 4B]

In accordance with Comparative Example 4B, as a positive electrode active material, iron oxalate (FeC₂O₄), ammonium hydrogen phosphate (NH₄H₂PO₄), and sodium carbonate were mixed, and further mixed with the addition of an aqueous solution containing sucrose thereto. Then, the mixture was put in a container made of alumina, heated and dried, and then heated in a nitrogen gas for preliminary firing at 300°C for 12 hours. Then, the preliminarily fired product was subjected to firing in a nitrogen gas at a temperature of 650°C for 12 hours, and then cooled to room temperature to obtain a powder (positive electrode active material). The powder was subjected to diffraction peak measurement by an X-ray diffractometer. The comparison of the diffraction peak with JCPDS data has confirmed that the peak almost agrees with NaFePO₄. Then, with the use of this positive electrode active material, a nonaqueous secondary battery was obtained in the same manner as in Example 4.

The nonaqueous secondary battery according to Comparative Example 4A uses NaCoO₂ as a positive electrode active material, and thus in the repetition of charging/discharging under a room-temperature condition, starts to undergo a decrease in charged/discharged capacity after a lapse of 50 cycles, and undergoes a rapid decrease in charged/discharged capacity after the lapse of 100 cycles, thereby leading to a decrease down to 50% or less of the initial capacity. In the nonaqueous secondary battery according to Comparative Example 4B, a carbonaceous layer is formed on the surface of NaFePO₄ subjected to firing at 650°C as a positive electrode active material. In the initial charge/discharge, the charge/discharge cycle was almost the same as in Example 4, but the charged/discharged capacity started to decrease after a lapse of 100 cycles, the decrease in charged/discharged capacity was gradually significant after 200 cycles, and after 300 cycles, a clearer decrease in charged/discharged capacity was observed than in Example 4, with the result that stability and reliability were inferior in a long-term cycle.

### Example 5

Example 5 is a modification of Example 1 and Example 4. In accordance with Example 5, a positive electrode member was fabricated in the same manner as in Example 4. In addition, a negative electrode member was produced in the same manner as in Example 1.

### [Comparative Example 5A]

In accordance with Comparative Example 5A, a positive electrode member was produced in the same manner as in Example 4. In addition, a negative electrode member was produced in the same manner as in Example 1. The separator is, as in Example 1, composed of a polyolefin-based material with pores (specifically, microporous polyethylene of 25 µm in thickness), but unlike Example 1, no inorganic compound powder layer is formed on both sides of the separator. Then, a nonaqueous secondary battery according to Example 5A was obtained in the same manner as in Example 1, with the use of the foregoing negative electrode member and positive electrode member.

### [Comparative Example 5B]

In accordance with Comparative Example 5B, a positive electrode member was produced in the same manner as in Example 4. In addition, a negative electrode member was produced in the same manner as in Example 1. The separator is, as in Example 1, composed of a polyolefin-based material with pores (specifically, microporous polyethylene of 25 µm in thickness), but unlike Example 1, an inorganic compound powder layer composed of α-alumina is formed on both sides of the separator. Then, a nonaqueous secondary battery according to Example 5B was obtained in the same manner as in Example 1, with the use of the foregoing negative electrode member and positive electrode member.

It is to be noted that separator according to Comparative Example 5B can be fabricated by the following method. More specifically, dried anhydrous calcium chloride was dissolved in NMP to prepare a 6% by mass calcium chloride solution. Then, a fibrous aramid resin was added to the NMP solution of calcium chloride to prepare an NMP solution of aramid resin. Subsequently, an aramid solution of α-alumina (pure Al₂O₃) dispersed was prepared by adding α alumina to the NMP solution of aramid resin so as to meet aramid resin : alumina = 40 : 60 (mass ratio). Then, the aramid solution of α-alumina dispersed was applied onto one side of microporous polyethylene of 16 µm in thickness with the use of a doctor blade (a device for applying a combination), and dried with hot air at 80°C, thereby forming an inorganic compound powder layer of 4 µm in thickness composed of α-alumina. Further, in accordance with the same method, an inorganic compound powder layer of 4 µm in thickness composed of α-alumina was formed on the other side of the microporous polyethylene. Then, the inorganic compound powder layers were sufficiently washed with pure water to remove calcium chloride, and at the same time, form fine pores in the inorganic compound powder layers, and dried. In this way, it was possible to obtain a heat-resistant separator with inorganic compound powder layers of 4 µm in thickness formed according to Comparative Example 5B, on both sides of microporous polyethylene.

Micropores were randomly formed in the inorganic compound powder layers composed of α-alumina, and as a result of observing a cross section of the separator with a scanning electron microscope (SEM), the average pore size was about 0.5 µm, and the porosity was about 45%. In addition, as a result of measuring the particle size distribution of the α-alumina used with a particle analyzer, the 50% particle size was 0.4 µm.

For the nonaqueous secondary batteries according to Example 5, Comparative Example 5A, and Comparative Example 5B, FIG. 8A shows therein initial charge/discharge curves (the horizontal axis indicates a capacity (unit: milliampere • hour/gram), whereas the horizontal axis indicates a voltage (unit: volt)), and FIG. 8B shows therein the result of examining the relationship between the number of charge/discharge cycles and the capacity (unit: milliampere • hour/gram). In addition, for the nonaqueous secondary batteries according to Example 5, Comparative Example 5A, and Comparative Example 5B, FIG. 9 shows therein the result of examining the relationship between the load current (unit: milliampere/cm²) and the capacity (unit: milliampere • hour/gram). It is to be noted that the data on Example 5 and Comparative Example 5A has an overlap in FIG. 8A. The initial characteristics of the nonaqueous secondary battery according to Example 5 are comparable to the initial characteristics of the nonaqueous secondary battery according to Comparative Example 5A, and superior to the initial characteristics of the nonaqueous secondary battery according to Comparative Example 5B. In addition, the nonaqueous secondary battery according to Example 5, which can be stably charged and discharged, exhibits superior characteristics to Comparative Example 5A and Comparative Example 5B.

### Example 6

Example 6 is a modification of Examples 1 to 5. In accordance with Example 1, Na₂Fe₂(SO₄)₃ was adopted as Na_{X}Fe_{Y}(SO₄)_{Z} constituting the positive electrode active material. On the other hand, in accordance with Example 6, Na_{X}Fe_{Y}(SO₄)_{Z} constituting a positive electrode active material is specifically composed of NaFe(SO₄)₂.

Hereinafter, a method for producing the positive electrode active material for a nonaqueous secondary battery according to Example 6, and a method for producing a nonaqueous secondary battery will be described.

First, Na₂SO₄ and FeSO₄ ·7H₂O are weighed at 1 : 2 in molar ratio. Then, under room temperature, these are mixed while being dispersed in water containing 3% by mass of sucrose. Subsequently, while the water temperature is gradually raised, and maintained at 60°C for about 2 hours when the temperature reaches 60°C, mixing and stirring are continued. Next, the water temperature is raised up to 90°C, maintained for 1 hour, and after mixing and stirring, cooled to room temperature. Thereafter, in order to separate the solid from the mixed solution, after filtration, the solid was washed by dispersion in alcohol, thereafter, separated by filtration, and then lightly crushed to obtain a powdery solid (a powdery solid where the surface of the positive electrode active material is coated with a carbon-based material). Next, the powdery solid was put in a container made of alumina, and carried into a drying system, and the temperature was raised up to 200°C, and dried at 200°C for 12 hours while flowing dry air. Then, the solid was carried into an electric furnace, and while flowing a nitrogen gas, heated up to 300°C at a rate of temperature rise of 5°C/min and maintained at 300°C for 6 hours, and further, the temperature was raised up to 350°C at 5°C/min and maintained at 350°C for 12 hours, and further raised up to 380°C at 5°C/min and maintained at 380°C for 12 hours. Then, thereafter, the temperature was lowered at 5°C/min, for cooling to around room temperature. In this way, it was possible to obtain a positive electrode active material with a surface coated with a hydrogen group-containing carbonaceous layer (so-called half-baked carbonaceous layer with co-existence of carbon with hydrogen).

In a glove box filled with a nitrogen gas, the positive electrode active material was transferred to an agate mortar, and subjected to grinding and stirring. Then, X-ray diffraction data (XRD data) on the positive electrode active material was collected with the use of an X-ray diffractometer. From the XRD data, it was possible to presume the material to be a compound in agreement with the X-ray diffraction peak disclosed in Energy & Environmental Science, "Eldfellite, NaFe(SO4)2: an intercalation cathode host for low-cost Na-ion batteries", 2015. Vol 10. (2015.9.2, web published). More specifically, obtained was the result that the material has a diffraction peak that can be approximated by the crystal structure of NaFe(SO₄)₂. The full width at half maximum for a peak in the vicinity of 2θ = 14 degrees in X-ray diffraction of the positive electrode active material with the use of the Cu-Kα ray was 0.5 degrees or more, specifically, 0.5 degrees to 0.7 degrees.

Then, a positive electrode member was fabricated in the same manner as in the [Step-110] of Example 1. In addition, a negative electrode member was fabricated in the same manner as in the [Step-120] of Example 1. Subsequently, in the same manner as in the [Step-130] of Example 1, a spiral electrode stacked body was obtained by winding. Then, further, a sodium ion secondary battery was obtained in the same manner as in Example 1.

### [Comparative Example 6A]

In accordance with Comparative Example 6A, first, Na₂SO₄ and FeSO₄·7H₂O are weighed at 1 : 2 in molar ratio. Then, under room temperature, these were mixed while being dispersed in water with Ketjen black (KB) dispersed therein unlike Example 6. Subsequently, in the same manner as in Example 6, a positive electrode active material according to Comparative Example 6A was obtained. Then, based on the positive electrode active material according to Comparative Example 6A, a nonaqueous secondary battery was fabricated in the same manner as in Example 6.

### [Comparative Example 6B]

In accordance with Comparative Example 6B, a powdery solid where the surface of a positive electrode active material was coated with a carbon-based material was obtained in the same manner as in Example 6. Then, in the same manner as in Example 6, the powdered solid was put in a container made of alumina, carried into a drying system, and after a temperature rise up to 200°C, dried while flowing air at 200°C for 12 hours. Subsequently, the solid was carried into an electric furnace, heated up to 300°C at a rate of temperature rise of 5°C/min while flowing a nitrogen gas, and kept at 300°C for 6 hours. The foregoing operation is carried out in the same way as in Example 6. Thereafter, unlike Example 6, the temperature was raised up to 500°C at 5°C/min and then maintained at 500°C for 12 hours, and further raised to 600°C at 5°C/min and then maintained at 600°C for 12 hours. Thereafter, thereafter, the temperature was lowered at 5°C/min, for cooling to around room temperature. In this way, the positive electrode active material according to Comparative Example 6B was obtained. The powdered positive electrode active material was black in color, and presumed to have sucrose carbonized. More specifically, it was possible to assume the surface layer of the positive electrode active material to have a conductive carbonaceous layer formed. Then, based on the positive electrode active material according to Comparative Example 6B, a nonaqueous secondary battery was fabricated in the same manner as in Example 6.

### Example 7

Example 7 is also a modification of Examples 1 to 5. In accordance with Example 7, Na_{X}Fe_{Y}(SO₄)_{Z} constituting a positive electrode active material is specifically composed of Na₂Fe(SO₄)₂.

Hereinafter, a method for producing the positive electrode active material for a nonaqueous secondary battery according to Example 7, and a method for producing a nonaqueous secondary battery will be described.

First, Na₂SO₄ and FeSO₄ ·7H₂O are weighed at 1 : 1 in molar ratio. Then, under room temperature, these are mixed while being dispersed in water containing 3% by mass of sucrose. Subsequently, while the water temperature is gradually raised, and maintained at 60°C for about 2 hours when the temperature reaches 60°C, mixing and stirring are continued. Next, the water temperature is raised up to 90°C, maintained for 1 hour, and after mixing and stirring, cooled to room temperature. Thereafter, in order to separate the solid from the mixed solution, after filtration, the solid was washed by dispersion in alcohol, thereafter, separated by filtration, and then lightly crushed to obtain a powdery solid (a powdery solid where the surface of the positive electrode active material is coated with a carbon-based material). Next, the powdery solid was put in a container made of alumina, and carried into a drying system, and the temperature was raised up to 200°C, and dried at 200°C for 12 hours while flowing dry air. Then, the solid was carried into an electric furnace, and while flowing a nitrogen gas, heated up to 300°C at a rate of temperature rise of 5°C/min and maintained at 300°C for 6 hours, and further, the temperature was raised up to 350°C at 5°C/min and maintained at 350°C for 12 hours, and further raised up to 380°C at 5°C/min and maintained at 380°C for 12 hours. Then, thereafter, the temperature was lowered at 5°C/min, for cooling to around room temperature. In this way, it was possible to obtain a positive electrode active material with a surface coated with a hydrogen group-containing carbonaceous layer (so-called half-baked carbonaceous layer with co-existence of carbon with hydrogen).

In a glove box filled with a nitrogen gas, the positive electrode active material was transferred to an agate mortar, and subjected to grinding and stirring. Then, X-ray diffraction data (XRD data) on the positive electrode active material was collected with the use of an X-ray diffractometer. From the XRD data of, it was possible to presume the material to be a compound in agreement with the X-ray diffraction peak disclosed in Japanese Patent Application Laid-open No.2015-515084. More specifically, obtained was the result that the material has a diffraction peak that can be approximated by the crystal structure of Na₂Fe(SO₄)₂. The full width at half maximum for a peak in the vicinity of 20 = 14 degrees in X-ray diffraction of the positive electrode active material with the use of the Cu-Kα ray was 0.5 degrees or more, specifically, 0.5 degrees to 0.7 degrees.

Then, a positive electrode member was fabricated in the same manner as in the [Step-110] of Example 1. In addition, a negative electrode member was fabricated in the same manner as in the [Step-120] of Example 1. Subsequently, in the same manner as in the [Step-130] of Example 1, a spiral electrode stacked body was obtained by winding. Then, further, a sodium ion secondary battery was obtained in the same manner as in Example 1.

### [Comparative Example 7]

In accordance with Comparative Example 7, first, Na₂SO₄ and FeSO₄·7H₂O are weighed at 1 : 1 in molar ratio. Then, under room temperature, these were mixed while being dispersed in water with Ketjen black (KB) dispersed therein unlike Example 7. Subsequently, in the same manner as in Example 7, a positive electrode active material according to Comparative Example 7 was obtained. Then, based on the positive electrode active material according to Comparative Example 7, a nonaqueous secondary battery was fabricated in the same manner as in Example 7.

For the nonaqueous secondary batteries according to Example 6 and Comparative Example 6A, FIG. 10A shows therein initial charge/discharge curves (the horizontal axis indicates a capacity (unit: milliampere • hour/gram), whereas the horizontal axis indicates a voltage (unit: volt)), FIG. 10B shows therein the result of examining the relationship between the number of charge/discharge cycles and the discharge capacity retention rate (%), and FIG. 11 shows therein the result of examining the relationship between the load current (unit: milliampere/cm²) and the capacity (unit: milliampere • hour/gram). It is determined that the nonaqueous secondary battery according to Example 6 exhibits excellent charge/discharge characteristics, as compared with the nonaqueous secondary battery according to Comparative Example 6A, and can maintain a stable discharged capacity even with the repetition of a charge/discharge cycle for a long period of time.

In addition, for the nonaqueous secondary batteries according to Example 7 and Comparative Example 7, FIG. 12A shows therein initial charge/discharge curves (the horizontal axis indicates a capacity (unit: milliampere • hour/gram), whereas the horizontal axis indicates a voltage (unit: volt)), FIG. 12B shows therein the result of examining the relationship between the number of charge/discharge cycles and the discharge capacity retention rate (%), and FIG. 13 shows therein the result of examining the relationship between the load current (unit: milliampere/cm²) and the capacity (unit: milliampere • hour/gram). It is determined that the nonaqueous secondary battery according to Example 7 exhibits excellent charge/discharge characteristics, as compared with the nonaqueous secondary battery according to Comparative Example 7, and can maintain a stable discharged capacity even with the repetition of a charge/discharge cycle for a long period of time.

FIG. 14A (Example 6) and FIG. 14B (Comparative Example 6B) show therein the results of checking whether the carbonaceous layer contains a hydrogen group or not, in accordance with reflective infrared spectroscopy. In FIG. 14A showing the result of Example 6, the absorption derived from "C-H" vibration was clearly observed in the vicinity of 2800 cm⁻¹. On the other hand, in FIG. 14B showing the result of Comparative Example 6B, the absorption derived from "C-H" vibration is not clearly observed in the vicinity of 2800 cm⁻¹. More specifically, it can be determined that a hydrogen group-containing carbonaceous layer is formed in accordance with Example 6, whereas it is not possible to determine that a hydrogen group-containing carbonaceous layer is formed in accordance with Comparative Example 6B. In each case of Example 6 and Comparative Example 6B, absorption due to "C = C" vibration was observed at 1000 cm⁻¹ to 800 cm⁻¹.

FIG. 15A shows therein a Raman spectroscopic spectrum for the positive electrode active material according to Example 6, and FIG. 15B shows therein a Raman spectroscopic spectrum for the positive electrode active material according to Example 7. Example 6 and Example 7 are, because the carbonaceous layer contains a hydrogen group (that is, carbon and hydrogen are mixed), considered to have no hexagonal net surfaces developed, and have a partially irregular carbonaceous layer (carbonaceous coating layer) formed with graphite crystallinity disordered due to hydrogen residues, in the same manner as described in Example 1.

When the positive electrode active material NaFe(SO₄)₂ described in Example 6 and the positive electrode active material Na₂Fe(SO₄)₂ described in Example 7 were applied to the positive electrode members of the nonaqueous secondary batteries described in Example 3, Example 4, and Example 5, similar results to those in Example 3, Example 4, and Example 5 were obtained.

### Example 8

Example 8 is a modification of Examples 1 to 5, which is composed of a flat plate-type laminate film-type sodium ion secondary battery, where a positive electrode member, a separator and a negative electrode member are wound. FIGS. 17 and 18A show therein schematic exploded perspective views of the sodium ion secondary battery, and FIG. 18B shows therein a schematic enlarged cross-sectional view taken along the arrow A-A of the electrode stacked body (stacked structure) shown in FIG. 18A (a schematic enlarged cross-sectional view along the YZ plane).

The sodium ion secondary battery according to Example 8 has an electrode stacked body 20 basically similar to those according to Example 1 to Example 5, which is housed inside an exterior member 300 composed of a laminate film. The electrode stacked body 20 can be fabricated by stacking a positive electrode member 22 and a negative electrode member 24 with a separator 26 and an electrolyte layer 27 interposed therebetween, and winding the stacked structure. A positive electrode lead part 23 is attached to the positive electrode member 22, and a negative electrode lead part 25 is attached to the negative electrode member 24. The outermost circumferential part of the electrode stacked body 20 is protected by a protective tape 28.

The positive electrode lead part 23 and the negative electrode lead part 25 protrude in the same direction from the inside toward the outside of the exterior member 300. The positive electrode lead part 23 is formed from a conductive material such as aluminum. The negative electrode lead part 25 is formed from a conductive material such as copper, nickel, or stainless steel. These conductive materials have the form of, for example, a thin plate or a net.

The exterior member 300 is a sheet of film that is foldable in the direction of the arrow R shown in FIG. 17, and a part of the exterior member 300 is provided with a recess (emboss) for housing the electrode stacked body 20. The exterior member 300 is, for example, a laminate film of a fusion layer, a metal layer, and a surface protective layer laminated in this order. In a process of manufacturing the sodium ion secondary battery, the exterior member 300 is folded so that the fusion layers are opposed to each other with the electrode stacked body 20 interposed therebetween, and then outer circumferential edges of the fusion layers are subjected to fusion bonding to each other. However, the exterior member 300 may have two laminate films bonded to each other with an adhesive or the like interposed therebetween. The fusion layer is composed of, for example, a film of polyethylene, polypropylene, or the like. The metal layer is composed of, for example, aluminum foil or the like. The surface protective layer is composed of, for example, nylon, polyethylene terephthalate or the like. Above all, the exterior member 300 is preferably an aluminum laminate film of a polyethylene film, an aluminum foil, and a nylon film laminated in this order. However, the exterior member 300 may be a laminate film that has another laminated structure, a polymer film such as polypropylene, or a metallic film. Specifically, the member is composed of a moisture-resistant aluminum laminate film (total thickness: 100 µm) of nylon film (thickness: 30 µm), aluminum foil (thickness: 40 µm), and cast polypropylene film (thickness: 30 µm) laminated in this order from the outside.

In order to prevent entry of outside air, an adhesive film 301 is inserted between the exterior member 300 and the positive electrode lead part 23 and between the exterior member 300 and the negative electrode lead part 25. The adhesive film 301 is composed of a material that has adhesion to the positive electrode lead part 23 and the negative electrode lead part 25, for example, a polyolefin-based resin or the like, more specifically, a polyolefin-based resin such as polyethylene, polypropylene, modified polyethylene, or modified polypropylene.

As shown in FIG. 18B, the positive electrode member 22 has a positive electrode active material layer 22B on one surface or both surfaces of a positive electrode current collector 22A. Further, the negative electrode member 24 has a negative electrode active material layer 24B on one side or both sides of a negative electrode current collector 24A.

### Example 9

In Example 9, an application example of the nonaqueous secondary battery according to the present disclosure will be described.

The application of the nonaqueous secondary battery according to the present disclosure is not particularly limited, as long as the secondary battery is applied to any machine, device, instrument, apparatus, system (assembly of multiple devices or the like) that can use the nonaqueous secondary battery according to the present disclosure as a driving/operating power supply or a power storage source for reserve of power. The nonaqueous secondary battery (specifically, sodium ion secondary battery) for use as a power supply may be a main power supply (a power supply that is used preferentially), or an auxiliary power supply (in place of a main power supply, or a power supply that is used by switching from a main power supply). In the case of using the sodium ion secondary battery as an auxiliary power supply, the main power supply is not limited to any sodium ion secondary battery.

Specific examples of the application of the nonaqueous secondary battery (specifically, sodium ion secondary battery) according to the present disclosure can include, but not limited thereto, as described previously, driving various types of electronic devices such as video cameras and camcorders, digital still cameras, cellular phones, personal computers, television receivers, various types of display devices, cordless telephones, headphone stereos, music players, portable radios, electronic papers such as electronic books and electronic newspapers, and portable information terminals including PDA (Personal Digital Assistant); electric devices (including portable electronic devices); toys; portable living appliances such as electric shavers; lighting such as interior lights; medical electronic devices such as pacemakers and hearing aids; memory devices such as memory cards; battery packs for use as detachable power supplies for personal computers and the like; power tools such as electric drills and electric saws; power storage systems and home energy servers (household electric storage devices) such as household battery systems intended to store electric power for emergency etc.; electric storage units and backup power supplies; electric vehicles such as electric cars, electric motorbikes, electric bicycles, and Segway (registered trademark); and electric power-driving force conversion devices of airplanes and ships (specifically, for example, a power motor).

Above all, it is effective for the nonaqueous secondary battery (specifically, sodium ion secondary battery) according to the present disclosure to be applied to a battery pack, an electric vehicle, a power storage system, a power tool, an electronic device, an electric device, or the like. Since excellent battery characteristics are required, the use of the sodium ion secondary battery according to the present disclosure can improve the performance in an effective manner. The battery pack is a power supply that uses a sodium ion secondary battery, which is a so-called assembled battery or the like. The electric vehicle is a vehicle that operates (travels) with the sodium ion secondary battery as a driving power supply, and may be a vehicle (a hybrid car or the like) also provided with a driving source other than the nonaqueous secondary battery. The power storage system is a system using a sodium ion secondary battery as a power storage source. For example, for a household power storage system, electric power is stored in the sodium ion secondary battery which serves as a power storage source, thus making it possible to use home electric appliances and the like through the use of electric power. The power tool is a tool which makes a movable part (such as a drill, for example) movable with the sodium ion secondary battery as a driving power supply. The electronic device and the electric device are devices that perform various functions with the sodium ion secondary battery as an operating power supply (power supply source).

Some application examples of the sodium ion secondary battery will be specifically described below. It is to be noted that the configuration of each application example described below is just considered by way of example, and can be changed appropriately.

FIG. 19 shows a schematic perspective view of a disassembled battery pack that uses a single battery, and FIG. 20A shows a block diagram illustrating the configuration of a battery pack (unit cell). The battery pack is a simplified battery pack (so-called soft pack) that uses one sodium ion secondary battery, which is, for example, mounted on electronic devices typified by smartphones. The battery pack includes a power supply 301 composed of the sodium ion secondary battery according to Examples 1 to 8 (Example 8 in the example shown), and a circuit board 305 connected to the power supply 301. A positive electrode lead part 23 and a negative electrode lead part 25 are attached to the power supply 301.

A pair of adhesive tapes 307 is attached to both side surfaces of the power supply 301. The circuit board 305 is provided with a protection circuit (PCM: Protection Circuit Module). The circuit board 305 is connected to the positive electrode lead part 23 via a tab 304A, and connected to the negative electrode lead part 25 via a tab 304B. In addition, a connector lead wire 306 for external connection is connected to the circuit board 305. With the circuit board 305 connected to the power supply 301, the circuit board 305 is protected from above and below by a label 308 and an insulating sheet 309. The circuit board 305 and the insulating sheet 309 are fixed by attaching the label 308. The circuit board 305 includes the control unit 41, the switch unit 42, a PTC element 43, a temperature detection unit 44, and a temperature detection element 44A. The power supply 301 is connectable to the outside via a positive electrode terminal 45A and a negative electrode terminal 45B, and charged and discharged. The power supply 301 is charged and discharged via the positive electrode terminal 45A and the negative electrode terminal 45B. The temperature detection unit 44 can detect a temperature via the temperature detection element 44A.

The control unit 41 that controls the operation (including the usage state of the power supply 301) of the whole battery pack includes a central processing unit (CPU), a memory, and the like. When the battery voltage reaches the overcharge detection voltage, the control unit 41 disconnects the switch unit 42, thereby keeping any charging current from flowing through the current path of the power supply 301. Further, when a large current flows during charging, the control unit 41 disconnects the switch unit 42 to shut off the charging current. Besides, when the battery voltage reaches the overdischarge detection voltage, the control unit 41 disconnects the switch unit 42, thereby keeping any discharging current from flowing through the current path of the power supply 301. Further, when a large current flows during discharging, the control unit 41 disconnects the switch unit 42 to shut off the discharging current.

The overcharge detection voltage of the sodium ion secondary battery is, for example, 4.20 volts ± 0.05 volts, and the overdischarge detection voltage is, for example, 2.4 volts ± 0.1 volts.

In response to an instruction from the control unit 41, the switch unit 42 switches the usage state of the power supply 301 (availability of the connection between the power supply 301 and an external device). The switch unit 42 is provided with a charge control switch, a discharge control switch, and the like. The charge control switch and the discharge control switch are composed of, for example, semiconductor switches such as a field effect transistor (MOSFET) using a metal oxide semiconductor. The charge/discharge current is detected, for example, on the basis of the on resistance of the switch unit 42. The temperature detection unit 44 including the temperature detection element 44 A such as a thermistor measures the temperature of the power supply 301, and outputs the measurement result to the control unit 41. The measurement result of the temperature detection unit 44 is used for charge/discharge control by the control unit 41 in the case of abnormal heat generation, correction processing in the case of remaining capacity calculation by the control unit 41, and the like. There is no need for the circuit board 305 to be provided with the PTC element 43, and in this case, the circuit board 305 may be provided separately with a PTC element.

Next, FIG. 20B shows a block diagram illustrating the configuration of another battery pack (assembled battery) different from what is shown in FIG. 20A. This battery pack includes, for example, inside a housing 50 fabricated from a plastic material or the like, a control unit 51, a memory 52, a voltage detection unit 53, a current measurement unit 54, a current detection resistor 54A, a temperature detection unit 55, a temperature detection element 55A, a switch control unit 56, a switch unit 57, a power supply 58, a positive electrode terminal 59A, and a negative electrode terminal 59B.

The control unit 51 controls the operation (including the usage state of the power supply 58) of the whole battery pack, and includes, for example, a CPU and the like. The power supply 58 is, for example, an assembled battery including two or more sodium ion secondary batteries (not shown) as described in Example 1 to Example 8, and the connection form of the sodium ion secondary batteries may be a connection in series, a connection in parallel, or a mixed type of the both. To give an example, the power supply 58 includes six sodium ion secondary batteries connected in the form of two in parallel and three in series.

In response to an instruction from the control unit 51, the switch unit 57 switches the usage state of the power supply 58 (availability of the connection between the power supply 58 and an external device). The switch unit 57 is provided with, for example, a charge control switch, a discharge control switch, a charging diode, and a discharging diode (none of which are shown). The charge control switch and the discharge control switch are composed of, for example, semiconductor switches such as a MOSFET.

The current measurement unit 54 measures current through the use of the current detection resistor 54A, and outputs the measurement result to the control unit 51. The temperature detection unit 55 measures a temperature through the use of the temperature detection element 55A, and outputs the measurement result to the control unit 51. The temperature measurement result is used, for example, for charge/discharge control by the control unit 51 in the case of abnormal heat generation, correction processing in the case of remaining capacity calculation by the control unit 51, and the like. The voltage detection unit 53 measures the voltage of the sodium ion secondary battery in the power supply 58, converts the measured voltage from analog to digital, and supplies the converted voltage to the control unit 51.

The switch control unit 56 controls the operation of the switch unit 57 in response to the signals input from the current measurement unit 54 and the voltage detection unit 53. For example, when the battery voltage reaches the overcharge detection voltage, the switch control unit 56 disconnects the switch unit 57 (charge control switch), thereby achieving control so as to keep any charging current from flowing through the current path of the power supply 58. Thus, only discharge via the discharging diode is allowed in the power supply 58. Further, for example, when a large current flows during charging, the switch control unit 56 cuts off the charging current. Furthermore, for example, when the battery voltage reaches the overdischarge detection voltage, the switch control unit 56 disconnects the switch unit 57 (discharge control switch), thereby keeping any discharging current from flowing through the current path of the power supply 58. Thus, only charge via the charging diode is allowed in the power supply 58. Further, for example, when a large current flows during discharging, the switch control unit 56 cuts off the discharging current.

The overcharge detection voltage of the sodium ion secondary battery is, for example, 4.20 volts ± 0.05 volts, and the overdischarge detection voltage is, for example, 2.4 volts ± 0.1 volts.

The memory 52 is composed of, for example, an EEPROM that is a non-volatile memory, or the like. The memory 52 stores, for example, numerical values calculated by the control unit 51, information on the sodium ion secondary battery, measured at the stage of manufacturing process, and the like (for example, internal resistance in the initial state, etc.). Storing the full charge capacity of the sodium ion secondary battery in the memory 52 allows the control unit 51 to grasp information such as the remaining capacity. The temperature detection element 55A composed of a thermistor or the like measures the temperature of the power supply 58, and outputs the measurement result to the control unit 51. The positive electrode terminal 59A and the negative electrode terminal 59B are terminals connected to an external device (for example, a personal computer, etc.) operated by the battery pack, or an external device or the like (for example, a charger, etc.) used for charging the battery pack. The power supply 58 is charged/discharged via the positive electrode terminal 59A and the negative electrode terminal 59B.

Next, FIG. 21A shows a block diagram illustrating the configuration of an electric vehicle, such as a hybrid car that is an example of an electric vehicle. The electric vehicle includes, for example, inside a metallic housing 60, a control unit 61, various sensors 62, a power supply 63, an engine 71, a power generator 72, inverters 73, 74, a motor 75 for driving, a differential device 76, a transmission 77, and a clutch 78. Besides, the electric vehicle includes, for example, front wheels 81 and a front wheel drive shaft 82 connected to the differential device 76 and the transmission 77, rear wheels 83, and a rear wheel drive shaft 84.

The electric vehicle can run, for example, with either the engine 71 or the motor 75 as a driving source. The engine 71 is a main power source, for example, a gasoline engine or the like. When the engine 71 is adopted as a power supply, the driving force (torque) of the engine 71 is transmitted to the front wheels 81 or the rear wheels 83 via, for example, the differential device 76, the transmission 77, and the clutch 78 which are driving units. The torque of the engine 71 is also transmitted to the power generator 72, the power generator 72 generates alternating-current power by the use of the torque, and the alternating-current power is converted to direct-current power via the inverter 74, and stored in the power supply 63. On the other hand, when the motor 75 as a conversion unit is adopted as a power supply, the power (direct-current power) supplied from the power supply 63 is converted to alternating-current power via the inverter 73, and the motor 75 is driven by the use of the alternating-current power. The driving force (torque) converted from the power by the motor 75 is transmitted to the front wheels 81 or the rear wheels 83 via, for example, the differential device 76, the transmission 77, and the clutch 78 which are driving units.

The electric vehicle may be configured such that when the electric vehicle is decelerated via a braking mechanism, not shown, the resistance force at the time of deceleration is transmitted as a torque to the motor 75, and the motor 75 generates alternating-current power by the use of the torque. The alternating-current power is converted to direct-current power via the inverter 73, and the direct-current regenerative power is stored in the power supply 63.

The control unit 61 intended to control the operation of the whole electric vehicle, includes, for example, a CPU and the like. The power supply 63 includes one or more sodium ion secondary batteries (not shown) as described in Example 1 to Example 8. The power supply 63 may be configured to be connected to an external power supply, and supplied with power from the external power supply to store electric power. The various sensors 62 are used, for example, for controlling the rotation speed of the engine 71, and controlling the position (throttle position) of a throttle valve, not shown. The various sensors 62 include, for example, a speed sensor, an acceleration sensor, an engine speed sensor, and the like.

It is to be noted that although a case where the electric vehicle is a hybrid car has been described, the electric vehicle may be a vehicle (electric car) that operates through the use of only the power supply 63 and the motor 75 without using the engine 71.

Next, FIG. 21B shows a block diagram illustrating the configuration of a power storage system. The power storage system includes, for example, a control unit 91, a power supply 92, a smart meter 93, and a power hub 94 inside a house 90 such as a general house and a commercial building.

The power supply 92 is connected to, for example, the electric device (electronic device) 95 installed inside the house 90, and connectable to the electric vehicle 97 parked outside the house 90. Further, the power supply 92 is, for example, connected via the power hub 94 to a private power generator 96 installed in the house 90, and connectable to an external centralized power system 98 via the smart meter 93 and the power hub 94. The electric device (electronic device) 95 includes, for example, one or more home electric appliances. Examples of the home electric appliances can include a refrigerator, an air conditioner, a television receiver, and a water heater. The private power generator 96 is composed of, for example, a solar power generator, a wind power generator, or the like. Examples of the electric vehicle 97 can include an electric car, a hybrid car, an electric motorcycle, an electric bicycle, and a Segway (registered trademark). Examples of the centralized power system 98 can include commercial power supplies, power generation devices, power transmission networks, and smart grids (next-generation power transmission networks), and examples thereof can include thermal power plants, nuclear power plants, hydroelectric power plants, and wind power plants, and examples of a power generation device provided in the centralized power system 98 can include various solar cells, fuel cells, wind power generation devices, micro-hydro power generation devices, and geothermal power generation devices, but the centralized power system 98 and the power generation device are not limited thereto.

The control unit 91 intended to control the operation (including the usage state of the power supply 92) of the whole power storage system, includes, for example, a CPU and the like. The power supply 92 includes one or more sodium ion secondary batteries (not shown) as described in Example 1 to Example 8. The smart meter 93 is, for example, a network-compatible power meter installed in the house 90 on the power demand side, which is capable of communicating with the power supply side. Further, the smart meter 93 controls the balance between demand and supply in the house 90 while communicating with the outside, thereby allowing efficient and stable supply of energy.

In this power storage system, for example, power is stored in the power supply 92 via the smart meter 93 and the power hub 94 from the centralized power system 98, which is an external power supply, and power is stored in the power supply 92 via the power hub 94 from the private power generator 96, which is an independent power supply. The electric power stored in the power supply 92 is supplied to the electric device (electronic device) 95 and the electric vehicle 97 in response to an instruction from the control unit 91, thus allowing the operation of the electric device (electronic device) 95, and allowing the electric vehicle 97 to be charged. More specifically, the power storage system is a system that allows power to be stored and supplied in the house 90 with the use of the power supply 92.

The electric power stored in the power supply 92 is arbitrarily available. Therefore, for example, electric power can be stored in the power supply 92 from the centralized power system 98 at midnight when the electricity charge is inexpensive, and the electric power stored in the power supply 92 can be used during the day when the electricity charge is expensive.

The power storage system described above may be installed for every single house (one household), or may be installed for every multiple houses (multiple households).

Next, FIG. 21C shows a block diagram illustrating the configuration of a power tool. The power tool is, for example, an electric drill, which includes a control unit 101 and a power supply 102 inside a tool body 100 made from a plastic material or the like. For example, a drill part 103 as a movable part is rotatably attached to the tool body 100. The control unit 101 intended to control the operation (including the usage state of the power supply 102) of the whole power tool, includes, for example, a CPU and the like. The power supply 102 includes one or more sodium ion secondary batteries (not shown) as described in Example 1 to Example 8. The control unit 101 supplies electric power from the power supply 102 to the drill part 103 in response to an operation of an operation switch, not shown.

Although the present disclosure has been described with reference to the preferred examples, the present disclosure is not to be considered limited to these examples, and various modifications can be made to the disclosure. The configurations and structures of the nonaqueous secondary batteries (specifically, sodium ion secondary batteries) described in the examples are considered by way of example, and can be changed as appropriate. The electrode stacked body (stacked structure) may be in a stacked state in addition to being wound.

### DESCRIPTION OF REFERENCE SYMBOLS

11: battery can
12, 13: insulating plate
14: battery cover
15: safety valve mechanism
15A: disk plate
16: thermosensitive resistive element (PTC element)
17: gasket
18: center pin
20: electrode stacked body (stacked structure)
22: positive electrode member
22A: positive electrode current collector
22B: positive electrode active material layer
23: positive electrode lead part
24: negative electrode member
24A: negative electrode current collector
24B: negative electrode active material layer
25: negative electrode lead part
26: separator
27: electrolyte layer
28: protective tape
41: control unit
42: switch unit
43: PTC element
44: temperature detection unit
44A: temperature detection element
45A: positive electrode terminal
45B: negative electrode terminal
50: housing
51: control unit
52: memory
53: voltage detection unit
54: current measurement unit
54A: current detection resistor
55: temperature detection unit
55A: temperature detection element
56: switch control unit
57: switch unit
58: power supply
59A: positive electrode terminal
59B: negative electrode terminal
60: housing
61: control unit
62: various sensors
63: power supply
71: engine
72: power generator
73, 74: inverter
75: motor
76: differential device
77: transmission
78: clutch
81: front wheel
82: drive shaft for front wheels
83: rear wheel
84: drive shaft for rear wheels
90: house
91: control unit
92: power supply
93: smart meter
94: power hub
95: electric device (electronic device)
96: private power generator
97: electric vehicle
98: centralized power system
100: tool body
101: control unit
102: power supply
103: drill part
301: power supply
304A, 304B: tab
305: circuit board
306: connector lead wire
307: adhesive tape
308: label
309: insulating sheet

## Claims

1. A nonaqueous secondary battery comprising:
a positive electrode member comprising a positive electrode active material comprising Na_{X}Fe_{Y}(SO₄)_{Z} (within ranges of 0 < X ≤ 3, 1 ≤ Y ≤ 3, and 2 ≤ Z ≤ 4), a conductive material, and a binder;
a negative electrode member comprising a negative electrode active material capable of inserting and desorbing sodium ions, and a binder; and
a separator,
wherein a surface of the positive electrode active material is coated with a hydrogen group-containing carbonaceous layer, and
wherein the separator comprises a polyolefin-based material with pores,
and an inorganic compound powder layer with sodium ion conductivity is formed on both sides of the separator.

2. The nonaqueous secondary battery according to claim 1, wherein a full width at half maximum for a peak in a vicinity of 2θ = 14 degrees in X-ray diffraction of the positive electrode active material with use of the Cu-Kα ray is 0.4 degrees or more.

3. The nonaqueous secondary battery according to claim 1 or 2, wherein the negative electrode active material comprises Na_{P}M_{Q}TiO_{R} (where 0 < P < 0.5, 0 < Q < 0.5, 1 ≤ R ≤ 2, M represents an alkali metal element other than Na).

4. The nonaqueous secondary battery according to claim 1 or 2, wherein the negative electrode active material comprises hard carbon, a NaTiO₂ based material, or a NaFePO₄ based material.

5. The nonaqueous secondary battery according to any of claims 1 to 4, wherein the binder constituting the negative electrode member comprises at least sodium polyacrylate, in particular wherein the binder constituting the negative electrode member further comprises carboxymethyl cellulose.

6. The nonaqueous secondary battery according to any of claims 1 to 5, wherein the inorganic compound powder layer comprises β-alumina.

7. The nonaqueous secondary battery according to any of claims 1 to 6, wherein the Na_{X}Fe_{Y}(SO₄)_{Z} constituting the positive electrode active material comprises Na₂Fe₂(SO₄)₃, Na₂Fe(SO₄)₃, or Na₂Fe(SO₄)₄.

8. The nonaqueous secondary battery according to any of claims 1 to 7, the nonaqueous secondary battery satisfying the following formulas:
positive electrode combination thickness > negative electrode combination thickness > (thickness of separator) × 6; and
area of separator > area of negative electrode member > area of positive electrode member.

9. The nonaqueous secondary battery according to any of claims 1 to 8, wherein the negative electrode member comprises a conductive material.

10. The nonaqueous secondary battery according to any of claims 1 to 9, wherein a full width at half maximum for a peak in a vicinity of 2θ = 14 degrees in X-ray diffraction of the positive electrode active material with use of the Cu-Kα ray is 0.4 degrees or more.

## Patentansprüche

1. Nichtwässrige Sekundärbatterie, die Folgendes aufweist:
ein Positivelektroden-Element, das ein Positivelektroden-Aktivmaterial aufweist, das Na_{X}Fe_{Y}(SO₄)_{Z} (in Bereichen von 0 < X ≤ 3, 1 ≤ Y ≤ 3, und 2 ≤ Z ≤ 4) aufweist, ein leitfähiges Material und ein Bindemittel;
ein Negativelektroden-Element, das ein Negativelektroden-Aktivmaterial, das in der Lage ist, Natriumionen einzufügen und zu desorbieren, und ein Bindemittel aufweist; und
einen Separator,
wobei eine Oberfläche des Positivelektroden-Aktivmaterials mit einer wasserstoffgruppenhaltigen kohlenstoffhaltigen Schicht beschichtet ist, und
wobei der Separator ein Material auf Polyolefinbasis mit Poren aufweist,
und eine Pulverlage aus einer anorganischen Verbindung mit Natriumionenleitfähigkeit auf beiden Seiten des Separators ausgebildet ist.

2. Nichtwässrige Sekundärbatterie nach Anspruch 1, wobei eine Halbwertsbreite für einen Peak in der Nähe von 2θ = 14 Grad bei der Röntgenbeugung des Positivelektroden-Aktivmaterials unter Verwendung des Cu-Kα-Strahls 0,4 Grad oder mehr beträgt.

3. Nichtwässrige Sekundärbatterie nach Anspruch 1 oder 2, wobei das Negativelektroden-Aktivmaterial Na_{P}M_{Q}TiO_{R} aufweist (in welchem 0 < P < 0,5, 0 < Q < 0,5, 1 ≤ R ≤ 2, M ein Alkalimetallelement außer Na darstellt).

4. Nichtwässrige Sekundärbatterie nach Anspruch 1 oder 2, wobei das aktive Material der Negativelektrode Hartkohle, ein Material auf NaTiO₂-Basis oder ein Material auf NaFePO₄-Basis aufweist.

5. Nichtwässrige Sekundärbatterie nach einem der Ansprüche 1 bis 4, wobei das Bindemittel, das die Negativelektrode bildet, mindestens Natriumpolyacrylat aufweist, insbesondere wobei das Bindemittel, das die Negativelektrode bildet, außerdem Carboxymethylcellulose aufweist.

6. Nichtwässrige Sekundärbatterie nach einem der Ansprüche 1 bis 5, wobei die Schicht aus anorganischem Verbindungspulver β-Aluminiumoxid aufweist.

7. Nichtwässrige Sekundärbatterie nach einem der Ansprüche 1 bis 6, wobei das Na_{X}Fe_{Y}(SO₄)_{Z}, das das Positivelektroden-Aktivmaterial bildet, Na₂Fe₂(SO₄)₃, Na₂Fe(SO₄)₃ oder Na₂Fe(SO₄)₄ aufweist.

8. Nichtwässrige Sekundärbatterie nach einem der Ansprüche 1 bis 7, wobei die nichtwässrige Sekundärbatterie die folgenden Formeln erfüllt:
Positivelektroden-Kombinations-Dicke > Negativelektroden-Kombinations-Dicke > (Dicke des Separators) x 6; und
Fläche des Separators > Fläche des Negativelektroden-Elements > Fläche des Positivelektroden- Elements.

9. Nichtwässrige Sekundärbatterie nach einem der Ansprüche 1 bis 8, wobei das Negativelektrodenelement ein leitfähiges Material aufweist.

10. Nichtwässrige Sekundärbatterie nach einem der Ansprüche 1 bis 9, wobei eine Halbwertsbreite für einen Peak in der Nähe von 2θ = 14 Grad bei der Röntgenbeugung des Positivelektroden-Aktivmaterials unter Verwendung des Cu-Kα-Strahls 0,4 Grad oder mehr beträgt.

## Revendications

1. Batterie secondaire non aqueuse, comprenant :
un élément d'électrode positive comprenant un matériau actif d'électrode positive comprenant du Na_{X}Fe_{Y}(SO₄)_{Z} (dans des plages de 0 < X ≤ 3, 1 ≤ Y ≤ 3, et 2 ≤ Z ≤ 4), un matériau conducteur, et un liant ;
un élément d'électrode négative comprenant un matériau actif d'électrode négative capable d'insérer et de désorber des ions sodium, et un liant ; et
un séparateur,
dans laquelle une surface du matériau actif d'électrode positive est recouverte d'une couche carbonée contenant un groupe hydrogène, et
dans laquelle le séparateur comprend un matériau à base de polyoléfine avec des pores, et une couche de poudre de composé inorganique avec une conductivité d'ions sodium est formée sur les deux côtés du séparateur.

2. Batterie secondaire non aqueuse selon la revendication 1, dans laquelle une largeur maximale à mi-hauteur pour un pic au voisinage de 2θ = 14 degrés dans la diffraction des rayons X du matériau actif d'électrode positive avec l'utilisation du rayon Cu-Kα est de 0,4 degré ou plus.

3. Batterie secondaire non aqueuse selon la revendication 1 ou 2, dans laquelle le matériau actif d'électrode négative comprend Na_{P}M_{Q}TiO_{R} (où 0 < P < 0,5, 0 < Q < 0,5, 1 ≤ R ≤ 2, M représente un élément métallique alcalin autre que Na).

4. Batterie secondaire non aqueuse selon la revendication 1 ou 2, dans laquelle le matériau actif d'électrode négative comprend du carbone dur, un matériau à base de NaTiO₂ ou un matériau à base de NaFePO₄.

5. Batterie secondaire non aqueuse selon l'une quelconque des revendications 1 à 4, dans laquelle le liant constituant l'élément d'électrode négative comprend au moins du polyacrylate de sodium, en particulier dans laquelle le liant constituant l'élément d'électrode négative comprend en outre de la carboxyméthylcellulose.

6. Batterie secondaire non aqueuse selon l'une quelconque des revendications 1 à 5, dans laquelle la couche de poudre de composé inorganique comprend de la β-alumine.

7. Batterie secondaire non aqueuse selon l'une quelconque des revendications 1 à 6, dans laquelle le Na_{X}Fe_{Y}(SO₄)_{Z} constituant le matériau actif d'électrode positive comprend Na₂Fe₂(SO₄)₃, Na₂Fe(SO₄)₃, ou Na₂Fe(SO₄)₄.

8. Batterie secondaire non aqueuse selon l'une quelconque des revendications 1 à 7, la batterie secondaire non aqueuse satisfaisant aux formules suivantes :
épaisseur de la combinaison d'électrode positive > épaisseur de la combinaison d'électrode négative > (épaisseur du séparateur) x 6 ; et
surface du séparateur > surface de l'élément d'électrode négative > surface de l'élément d'électrode positive.

9. Batterie secondaire non aqueuse selon l'une quelconque des revendications 1 à 8, dans laquelle l'élément d'électrode négative comprend un matériau conducteur.

10. Batterie secondaire non aqueuse selon l'une quelconque des revendications 1 à 9, dans laquelle une largeur maximale à mi-hauteur d'un pic au voisinage de 2θ = 14 degrés dans la diffraction des rayons X du matériau actif d'électrode positive avec l'utilisation du rayon Cu-Kα est de 0,4 degré ou plus.
